# EUROPÄISCHE PATENTSCHRIFT

(11) **EP 3 455 036 B1**
(45) Veröffentlichungstag und Bekanntmachung des Hinweises auf die Patenterteilung: **15.04.2020**
(21) Anmeldenummer: 17721687.6
(22) Anmeldetag: 05.05.2017
(51) Int. Cl.: B25J 15/02

(54) **ROBOTERGREIFER MIT EINER ANTRIEBSVORRICHTUNG**
ROBOT GRIPPER HAVING A DRIVE DEVICE
PRÉHENSEUR DE ROBOT POURVU D'UN DISPOSITIF D'ENTRAÎNEMENT

(30) Priorität: 13.05.2016 DE 102016208331
(43) Veröffentlichungstag der Anmeldung: 20.03.2019
(73) Patentinhaber: KUKA Deutschland GmbH, 86165 Augsburg (DE)
(72) Erfinder: BRUDNIOK, Sven, 86853 Langerringen (DE)
(74) Vertreter: Tillmann, Axel
(86) Internationale Anmeldenummer: PCT/EP2017/060799
(87) Internationale Veröffentlichungsnummer: WO 2017/194413

(56) Entgegenhaltungen:
- EP-A2- 0 140 569
- EP-B1- 2 660 015
- US-A1- 2011 089 709

## Beschreibung

Die Erfindung betrifft einen Robotergreifer, aufweisend einen ersten Greiferfinger und wenigstens einen zweiten Greiferfinger, einen Greifergrundkörper, ein Basisglied, welches mittels eines ersten Drehgelenks um eine erste Drehachse drehbar bezüglich des Greifergrundkörpers gelagert ist, und ein Zwischenglied, welches mittels eines zweiten Drehgelenks bezüglich des Basisglieds drehbar gelagert ist und zwar um eine zweite Drehachse, die parallel zur ersten Drehachse ausgerichtet und in einem konstanten ersten Abstand von der ersten Drehachse angeordnet ist.

Aus der WO 2008/083995 A1 ist eine Vorrichtung zur Qualitätskontrolle eines rotationssymmetrischen Körpers bekannt, wobei die Vorrichtung ein Handhabungssystem mit einem Greifer zum Greifen des Körpers und zum Transportieren des Körpers in eine Arbeitsposition, sowie mindestens eine elektronische Kamera zum optischen Abtasten des Körpers in der Arbeitsposition aufweist, wobei der Greifer des Handhabungssystems Greiffinger mit rotationssymmetrischen Halteelementen zum Festhalten des Körpers aufweist, wobei die Halteelemente um ihre Rotationsachsen rotierbar ausgebildet sind. Die Halteelemente der Greiffinger des Greifers sind dabei jeweils mit einem Zahnrad drehfest verbunden, wobei die Zahnräder aller Greiffinger des Greifers mittelbar über mindestens ein weiteres Zahnrad mit einem zentralen Zahnrad des Greifers in Eingriff stehen, und der Greifer einen Antriebsmechanismus aufweist, welcher das zentrale Zahnrad in eine Rotationsbewegung versetzt.

Aus der EP 2 660 015 B1 ist ein Greifer zum Manipulieren von, insbesondere röhrchenförmigen, Probengefäßen bekannt, mit einer Greiferbasis, wenigstens zwei je einen Halteabschnitt zum Erfassen eines Probengefäßes aufweisenden, jeweils um eine Fingerrotationsachse relativ zu der Greiferbasis verdrehbar an der Greiferbasis angeordneten Greiferfingern, wobei die Halteabschnitte der Greiferfinger jeweils in Bezug auf die zugeordnete Fingerrotationsachse azentrisch angeordnet sind, und mit einem ersten Antrieb zum Verdrehen der Greiferfinger, wobei die Greiferfinger derart miteinander gekoppelt sind, dass sie von dem Antrieb gleichzeitig und mit jeweils gleicher Rotationsgeschwindigkeit und -richtung angetrieben werden, wobei die Greiferbasis an einem Grundkörper und relativ zu diesem um eine von den Fingerrotationsachsen verschiedene Basisrotationsachse drehbar angeordnet ist, dass ein zweiter Antrieb zum Verdrehen der Greiferbasis relativ zu dem Grundkörper vorgesehen ist und dass eine Steuereinrichtung vorgesehen ist zum Steuern der Antriebe derart, dass durch eine Bewegungskombination aus Verdrehen der Greiferfinger relativ zu der Greiferbasis und Verdrehen der Greiferbasis relativ zu dem Grundkörper für jeden der Halteabschnitte der Greiferfinger jeweils eine im Wesentlichen lineare Bewegung relativ zu dem Grundkörper resultiert.

Aus der EP 0 140 569 A2 ist außerdem ein Greifer bekannt, der drei koaxial angeordnete Drehglieder mit jeweils einem Finger aufweist.

Aufgabe der Erfindung ist es, einen Robotergreifer zu schaffen, der einen einfachen und zuverlässigen mechanischen Aufbau aufweist.

Diese Aufgabe wird erfindungsgemäß gelöst durch einen Robotergreifer, aufweisend einen ersten Greiferfinger und wenigstens einen zweiten Greiferfinger, einen Greifergrundkörper, ein Basisglied, welches mittels eines ersten Drehgelenks um eine erste Drehachse drehbar bezüglich des Greifergrundkörpers gelagert ist, und ein Zwischenglied, welches mittels eines zweiten Drehgelenks bezüglich des Basisglieds drehbar gelagert ist und zwar um eine zweite Drehachse, die parallel zur ersten Drehachse ausgerichtet und in einem konstanten ersten Abstand von der ersten Drehachse angeordnet ist, des Weiteren aufweisend einen Fingerträger, der den ersten Greiferfinger trägt und der mittels eines dritten Drehgelenks bezüglich des Zwischenglieds drehbar gelagert ist und zwar um eine dritte Drehachse, die parallel sowohl zur ersten Drehachse als auch zur zweiten Drehachse ausgerichtet und in einem konstanten zweiten Abstand von der zweiten Drehachse angeordnet ist, sowie aufweisend eine von dem ersten Drehgelenk, dem zweiten Drehgelenk und dem dritten Drehgelenk separate Antriebsvorrichtung, die sich gegen den Greifergrundkörper abstützt und die ausgebildet ist, den Fingerträger relativ zum zweiten Greiferfinger mit einer Antriebskraft zu verstellen, die ausschließlich über die Antriebsvorrichtung in den Fingerträger eingeleitet wird.

Roboterarme mit zugehörigen Robotersteuerungen, insbesondere Industrieroboter sind Arbeitsmaschinen, die zur automatischen Handhabung und/oder Bearbeitung von Objekten mit Werkzeugen ausgerüstet werden können und in mehreren Bewegungsachsen beispielsweise hinsichtlich Orientierung, Position und Arbeitsablauf programmierbar sind. Industrieroboter weisen üblicherweise einen Roboterarm mit mehreren über Gelenke verbundene Glieder und programmierbare Robotersteuerungen (Steuervorrichtungen) auf, die während des Betriebs die Bewegungsabläufe des Roboterarms automatisch steuern bzw. regeln, um einen Roboterflansch des Roboterarms im Raum zu positionieren und zu bewegen. Die Glieder werden dazu über Antriebsmotoren, insbesondere elektrische Antriebsmotoren, die von der Robotersteuerung angesteuert werden, insbesondere bezüglich der Bewegungsachsen des Industrieroboters, welche die Bewegungsfreiheitsgrade der Gelenke repräsentieren, bewegt.

Der Roboter kann beispielsweise ein Industrieroboter sein, der insbesondere ein Knickarmroboter mit seriell aufeinander folgenden Drehachsen, beispielsweise sechs Drehachsen sein kann. Alternativ kann der Roboter ein SCARA-Roboter, d.h. ein horizontaler Gelenkarmroboter sein, welcher in der Regel vier Freiheitsgrade bzw. Achsen, d.h. Gelenke aufweist, von denen drei Gelenke Drehgelenke sein können und ein Gelenk ein Schubgelenk ist. Der Roboter kann aber auch ein sogenannter Leichtbauroboter sein, welcher insbesondere sieben seriell aufeinander folgende Drehachsen aufweisen kann.

Leichtbauroboter unterscheiden sich zunächst von üblichen Industrierobotern dadurch, dass sie eine für die Mensch-Maschine-Kooperation günstige Baugröße aufweisen und dabei eine zu ihrem Eigengewicht relativ hohe Tragfähigkeit aufweisen. Daneben können Leichtbauroboter insbesondere auch kraft-und/oder momentgeregelt statt lediglich positionsgeregelt betrieben werden, was beispielsweise eine Mensch-Roboter-Kooperation sicherer macht. Außerdem kann dadurch eine solche sichere Mensch-Maschine-Kooperation erreicht werden, dass beispielsweise unbeabsichtigte Kollisionen des Roboterarmes mit Personen, wie beispielsweise Werker und Monteure entweder verhindert oder zumindest derart abgeschwächt werden können, so dass den Personen bzw. Monteuren kein Schaden entsteht.

Ein solcher Roboterarm bzw. ein solcher Leichtbauroboter weist vorzugsweise mehr als sechs Freiheitsgrade auf, so dass insoweit ein überbestimmtes System geschaffen wird, wodurch derselbe Punkt im Raum in gleicher Orientierung in mehreren, insbesondere sogar unendlich vielen verschiedenen Posen des Roboterarms erreicht werden kann. Der Leichtbauroboter kann auf externe Krafteinwirkungen in geeigneten Weisen reagieren. Zur Kraftmessung können jeweils an den Gelenken angeordnete Drehmomentsensoren verwendet werden, die in mehreren Raumrichtungen Drehmomente und Kräfte erfassen bzw. messen können. Alternativ oder ergänzend können die externen Kräfte auch sensorlos, beispielsweise anhand der gemessenen Motorströme der Antriebe an den Gelenken des Leichtbauroboters abgeschätzt werden. Als Regelungskonzepte kann beispielsweise eine indirekte Kraftregelung durch Modellierung des Leichtbauroboters als mechanischer Widerstand (Impedanz) oder eine direkte Kraftregelung verwendet werden.

In gleicher Weise kann auch ein SCARA-Roboter über jeweils an den Gelenken angeordnete Drehmomentsensoren verfügen, die in mehreren Raumrichtungen Drehmomente und Kräfte erfassen bzw. messen können. Alternativ oder ergänzend können auch bei einem SCARA-Roboter die externen Kräfte sensorlos, beispielsweise anhand der gemessenen Motorströme der Antriebsmotoren an den Gelenken des SCARA-Roboters abgeschätzt werden.

Indem der Robotergreifer eine von dem ersten Drehgelenk, dem zweiten Drehgelenk und dem dritten Drehgelenk separate Antriebsvorrichtung aufweist, die sich gegen den Greifergrundkörper abstützt und die ausgebildet ist, den Fingerträger relativ zum zweiten Greiferfinger mit einer Antriebskraft zu verstellen, die ausschließlich über die Antriebsvorrichtung in den Fingerträger eingeleitet wird, kann ein einfacher und zuverlässiger mechanischen Aufbau des Robotergreifers erreicht werden. Dies wird insbesondere dadurch erreicht, dass die Antriebskraft nicht über das erste Drehgelenk, das zweite Drehgelenk und das dritte Drehgelenk geleitet wird, also über keines der vorhandenen Drehgelenke geführt wird, sondern vielmehr unmittelbar von dem Greifergrundkörper in den Fingerträger und damit in den ersten Greiferfinger eingeleitet wird. Die Antriebskraft wird demgemäß ausschließlich über die Antriebsvorrichtung geführt und nicht über die Lagerung, welche das Basisglied und das Zwischenglied umfasst. Ein weiterer Aspekt besteht darin, dass trotz gleichbleibender konstruktiver Ausführung der Lagerung, d.h. des ersten Drehgelenks, des zweiten Drehgelenks und des dritten Drehgelenks, die Antriebsvorrichtung je nach gewünschter Bewegungsbahn für die Bewegung des ersten Greiferfingers konstruktiv unterschiedlich ausgebildet sein kann. Eine Antriebsvorrichtung einer ersten bestimmten Bewegungsart kann bspw. durch eine andere Antriebsvorrichtung einer zweiten Bewegungsart auf einfache Weise ersetzt werden, ohne die Lagerungen, d.h. die drei Drehgelenke oder das Basisglied bzw. das Zwischenglied ersetzen zu müssen. Eine erste Bewegungsart kann beispielsweise eine geradlinige Bewegung sein, die der erste Greiferfinger dadurch ausführt, dass er direkt auf den zweiten, insbesondere feststehenden Greiferfinger auf kürzestem Weg zubewegt wird. Eine zweite, andere Bewegungsart kann beispielsweise eine Bewegung des ersten Greiferfingers auf einer schrägen oder kreisbogenförmigen Bahn sein.

Erreicht wird dies durch die Art der Lagerung der bewegten Teile, insbesondere des Basisglieds, des Zwischenglieds und des Fingerträgers. Die Lagerungsstellen, die beispielsweise durch Unterlager und Oberlager gebildet werden können, können einen deutlichen Abstand zueinander aufweisen. Über diese Art der Lagerung kann eine Entkopplung der Lagerungskraft von der Greifkraft erfolgen, die vom Antrieb, d.h. von der separaten Antriebsvorrichtung aufgebracht wird. Eine Entkopplung tritt auch bei einem einseiten Lager auf, das Momente in beide Richtungen aufnehmen kann. Die Lagerungskraft nimmt das Moment auf, welches aufgrund der Länge der Greiferfinger (Greiferbacken) am Greifergrundkörper nahem Ende der Greiferfinger anliegt. Das Moment wird bauartbedingt vor allem über ein Kräftepaar aufgenommen, deren Kraftrichtungen parallel zu der Backenschließkraft wirkt und nicht senkrecht dazu, wie es z.B. bei bekannten Standard-Linearführungen der Fall ist.

Im Unterschied zu anderen Greifern weist der erfindungsgemäße Robotergreifer eine von der Lagerung separate Antriebsvorrichtung auf. Während sonst die drei Drehgelenke der Lagerung direkt jeder für sich angetrieben werden oder die drei Drehgelenke der Lagerung über feste Getriebe miteinander gekoppelt sind und somit durch einen gemeinsamen Antrieb angetrieben werden, werden beim erfindungsgemäßen Robotergreifer die drei Drehgelenke der Lagerung passiv mitgeführt und übernehmen in dieser Konfiguration nur die Funktion Lagerung der bewegten Greiferfinger. Ein Bewegen des ersten, beweglichen Greiferfingers erfolgt mittels der erfindungsgemäßen Antriebsvorrichtung direkt durch unmittelbares Verstellen des ersten Greiferfingers durch die Antriebsvorrichtung und gibt dort die Bahn direkt vor, auf der sich der Greiferfinger bewegen soll. Wenn der Greiferfinger sich auf einer linearen Bahn wegen soll, kann ein Antrieb des ersten Greiferfingers durch eine Antriebsvorrichtung erfolgen, die beispielsweise eine Gewindespindel aufweist.

Der Robotergreifer verfügt über wenigstens zwei Backen, d.h. Greiferfinger, die sich in einer Ausführungsform linear zueinander bewegen können. Die eine Backe ist starr zur Basis des Greifers, mit der der Greifer am Flansch eines Roboters montiert wird angeordnet, und die andere Backe kann sich bewegen. Diese Konfiguration ermöglicht einen exakten Griff, auch wenn die Bewegung der einen beweglichen Backe ungenau ist.

Das zu greifende Objekt wird aktiv von der bewegten Backe gegen die relativ zur Basis des Greifers statische Backe gedrückt. Da die Position der unbeweglichen Backe exakt bekannt ist, ist auch die Position des gegriffenen Objektes exakt bekannt.

Die eine bewegliche Backe kann sich in dieser Ausführung des Greifers auf einer Geraden relativ zur starren Backe bewegen.

Die Lagerung einer solchen Linearbewegung erfolgt über drei ineinander verschachtelte Rotationen. Die Durchmesser und Position der drei seriell verbauten Lagerungen können so aufeinander abgestimmt sein, dass eine Bewegung der bewegten Backe auf der vorgesehenen Bahn möglich ist.

Um die Aufnahme von Momenten durch die Lagerung zu ermöglichen, die durch die Greifbackenlänge und der Greifkraft verursacht werden, werden entweder Lagerungen verbaut, die Momente aufnehmen können, wie z.B. Vierpunktlager, oder es werden zwei Lagerungseinheiten verbaut, die einen Abstand zueinander aufweisen.

Lagerungseinheiten, die einen Abstand zueinander aufweisen, können beispielsweise aus einem Paar von Lagerungseinheiten gebildet werden, wobei eine Lagerungseinheit (in z-Richtung) in einer oberen Ebene (Oberlager) und die andere Lagerungseinheit (in z-Richtung) in einer unteren Ebene (Unterlager) angeordnet ist. Die Innendurchmesser der Lagerungen in der unteren Eben sind so groß, dass die Lagerung des Zwischenglieds den Fingerträger und die Lagerung des Basisglieds das Zwischenglied so umschließt, dass der Fingerträger, der auf einem Bauteil befestigt ist, das durch die Lagerung der unteren Ebene zur Spindelmutter reicht, auf der durch den Antrieb vorgegebenen Bahn verfahren kann. Die Innendurchmesser der Lagerungen in der oberen Ebene können einen kleineren Durchmesser aufweisen, da sie die seriell nachfolgenden Lager nicht umschließen müssen, da in der oberen Lagerungsebene kein Bauteil auf der Fingerachse des bewegten Fingers die obere Lagerungsebene überquert. Die Lager mit einem größeren Durchmesser können auch so gestaltet sein, dass sie Momente ohne ein zweites Oberlager aufnehmen können, beispielsweise durch Kreuzrollenlager oder Vierpunktlager. Diese Lagerung kann hohe Momente aufgrund des Durchmessers der Lager aufnehmen. Weiterhin wird dadurch ein Verdrehen der Lageroberseite zur Lagerunterseite konstruktiv ausgeschlossen.

Die Klemmkraft an den Backen wird allein von der Antriebsvorrichtung aufgebracht, die direkt an der bewegten Backe in Richtung der Klemmkraft wirkt.

Der wenigstens eine zweite Greiferfinger kann demgemäß bezüglich des Greifergrundkörpers feststehend angeordnet sein. Feststehend kann in diesem Zusammenhang unter anderem bedeuten, dass der wenigstens eine zweite Greiferfinger beispielsweise mit Schrauben fixiert ist. Somit kann der wenigstens eine zweite Greiferfinger zwar versetzt werden, aber es ist dabei keine aktive Antriebsvorrichtung vorhanden. Selbstverständlich kann der wenigstens eine zweite Greiferfinger auch anderweitig fixiert sein oder mit dem Grundkörper einstückig ausgebildet sein.

Insbesondere kann der wenigstens eine zweite Greiferfinger an dem Greifergrundkörper unmittelbar starr befestigt sein.

Die Antriebsvorrichtung kann in einer speziellen Ausführungsform einen Motor und eine am Greifergrundkörper um eine Spindelachse drehbar gelagerte und von dem Motor drehangetriebene Antriebsspindel aufweisen, auf der eine Abtriebs-Spindelmutter entlang der Spindelachse linear verstellbar gelagert ist, wobei die Abtriebs-Spindelmutter zum Bewegen des Fingerträgers durch ein Antreiben des Motors an den Fingerträger angekoppelt ist.

In einer Variante kann der Fingerträger starr mit der Abtriebs-Spindelmutter verbunden sein.

In einer anderen Variante kann der Robotergreifer eine Linearführung aufweisen, die ausgebildet ist, den Fingerträger bezüglich des Greifergrundkörpers mittels einer zweiwertigen ersten Lagerung zur Aufnahme von Kräften derart geführt zu lagern, dass der Fingerträger nur in Richtung der Spindelachse verstellbar ist, wobei der Fingerträger mittels einer einwertigen zweiten Lagerung an die Abtriebs-Spindelmutter zur Kraftübertragung angekoppelt ist.

Der Antrieb übernimmt die Aufgabe, eine Kraft in Bewegungsrichtung auf den bewegten Finger zu übertragen. Vom Antrieb werden Kräfte in dieser Ausführungsvariante in eine Bewegungsrichtung, d.h. in x-Richtung übertragen. Bspw. bei einem Antrieb mit Antriebsspindel ist die Bewegungsrichtung und damit die x-Richtung diejenige Richtung, in der eine Abtriebs-Spindelmutter, an die der bewegte Finger gekoppelt ist, sich auf der Antriebsspindel linear bezüglich Spindelachse entlang bewegt. Die y-Richtung ist dann eine zur x-Richtung orthogonale Richtung, die in einer Ebene liegt, aus der sich der bewegt Finger mit seiner Längserstreckung senkrecht heraus erstreckt. Die Längserstreckung des bewegten Fingers entspricht folglich der z-Richtung. Von der Lagerung des Fingers werden die Momente um die x-Achse und um die y-Achse aufgenommen. Im Greifer müssen dann noch die Kräfte in y-Richtung und in z-Richtung und das Moment in z-Richtung aufgenommen werden. Dies kann auf verschiedenen Weg erfolgen. So können beispielsweise Kräfte und/oder Momente über die Antriebsvorrichtung aufgenommen werden. Der Antrieb der bewegten Backe kann dabei über eine Spindel erfolgen, die in der Basis vom Greifer gelagert ist. Die Lagerung der Spindel erfolgt so, dass sie nur einen Freiheitsgrad hat und zwar die Rotation um die Längsachse, die von einem Motor angetrieben wird. Über diese Spindel ist es möglich die Kräfte in y-Richtung und in z-Richtung und das Moment in z-Richtung mit der Spindelwelle aufzunehmen.

Über die Spindel können zusätzlich auch Momente in y-Richtung aufgenommen werden, die auch von der Lagerung abgefangen werden, was zu einer zusätzlichen Versteifung der Lagerung führt.

Alternativ können die Kräfte und/oder Momente über eine zusätzliche Führung aufgenommen werden. Die Abtriebs-Spindelmutter kann so an den Finger angeschlossen werden, dass keine starre Verbindung entsteht, sondern bestimmte Richtungskomponenten von Kräften und Momenten frei bleiben. Dies bezieht sich auf Kräfte in y-Richtung oder z-Richtung und Momente um die y-Achse, die x-Achse und z-Achse. Dies hat zur Folge, dass die Antriebsvorrichtung mit den dann freigegebenen Kräften und Momenten nicht mehr belastet wird. Diese Kräfte und Momente können über die Lagerung der Mechanik und/oder über zusätzliche Führungen für den Fingerträger und/oder über zusätzliche Führungen an der Mechanik des Greifers eingebracht und von diesen aufgenommen werden.

Nach Möglichkeit ist die Konstruktion eindeutig zu gestallten. In Spezialfällen können auch Doppelpassungen eingesetzt werden, um z.B. die Steifigkeit zu erhöhen. Diese Doppelpassungen können so aufgebaut sein, dass beide Anschläge erst dann zum Tragen kommen, wenn die Greifkraft eine gewisse Schwelle überschritten hat. Dies erfolgt bei einem Greifer nur, wenn die Greifkraft auftritt, was im Stillstand erfolgt. Im Stillstand stellt eine Doppelpassung nicht unbedingt einen kinematischen Nachteil dar.

Der Antriebsmotor befindet sich in einer konkreten Ausführungsform unmittelbar bei oder neben der Spindelwelle beispielsweise im Gehäuse des Robotergreifers. Das Antriebsmoment wird mit einem Bauteil des Antriebsstrangs, z.B. einem Zahnriemen oder einer Verzahnung auf die Spindelwelle übertragen.

Der Robotergreifer kann demgemäß in einer speziellen Ausführungsvariante eine einwertige Drehmomentabstützung aufweisen, die ausgebildet ist, den Fingerträger bezüglich des Greifergrundkörpers lediglich um einen einzigen Drehfreiheitsgrad zur Aufnahme von Drehmomenten um eine Längserstreckung des ersten Greiferfingers zu lagern, wobei der Fingerträger mittels des ersten Drehgelenks, des zweiten Drehgelenks und des dritten Drehgelenks in den beiden anderen Drehfreiheitsgraden des Fingerträgers abgestützt ist. Diese Abstützung kann auch eine Abstützung in y-Richtung ermöglichen und ist dann zweiwertig.

In allen Ausführungen kann das Basisglied eine rotationssymmetrische Außenmantelwand aufweisen, an der das Basisglied vollständig innerhalb der Außenkontur des Greifergrundkörpers drehbar gelagert ist, das Zwischenglied des Robotergreifers eine rotationssymmetrische Außenmantelwand aufweisen, an der das Zwischenglied vollständig innerhalb der Außenkontur des Basisglieds drehbar gelagert ist, und der Fingerträger des Robotergreifers eine rotationssymmetrische Außenmantelwand aufweisen, an der der Fingerträger vollständig innerhalb der Außenkontur des Zwischenglieds drehbar gelagert ist, wobei
- das erste Drehgelenk ein das Basisglied umgebendes erstes Unterlager aufweist, das auf einer dem Fingerträger nahen Bauhöhe angeordnet ist und ein zum ersten Unterlager beabstandetes, insbesondere das Basisglied umgebendes, erstes Oberlager aufweist, das auf einer dem Fingerträger fernen Bauhöhe angeordnet ist,
- das zweite Drehgelenk ein das Zwischenglied umgebendes zweites Unterlager aufweist, das auf einer dem Fingerträger nahen Bauhöhe angeordnet ist und ein zum zweiten Unterlager beabstandetes, insbesondere das Zwischenglied umgebendes, zweites Oberlager aufweist, das auf einer dem Fingerträger fernen Bauhöhe angeordnet ist, und
- das dritte Drehgelenk ein den Fingerträger umgebendes drittes Unterlager aufweist, das auf einer dem Fingerträger nahen Bauhöhe angeordnet ist und ein zum dritten Unterlager beabstandetes, insbesondere den Fingerträger umgebendes, drittes Oberlager aufweist, das auf einer dem Fingerträger fernen Bauhöhe angeordnet ist.

Wenn die Lagerung eines oder mehrerer Achskörper, d.h. des Basisglieds, des Zwischenglieds und/oder des Fingerträgers, auf zwei Ebenen parallel zueinander verteilt ist, können Kippmomente auf die Backen zu einem Verdrehen der beiden Lagerungen relativ zueinander führen. Um dies zu verhindern können Segmente von beiden Ebenen, die die gleichen Bewegungen durchführen miteinander starr verbunden werden. Die verbindenden Zwischensegmente, wie beispielsweise Zapfen, sind dabei in ihrer Form so auszuführen, dass sie die beiden Segmente möglichst starr bezüglich einer Torsion um die gemeine Drehachse verbinden.

Die doppelte Lagerung des Greiferfingers auf dessen Längsachse ermöglicht die Aufnahmen von Momenten. Der Hebelarm zur Aufnahme der Momente kann länger gewählt werden, als in einer Lagerung eines Greiferfingers auf einer Linearführung. Weiterhin können hierfür Lager genutzt werden, die aufgrund ihrer Abmessungen größere Kräfte aufnehmen können, als dies bei bekannten Linearführungen der Fall ist. Bei Standard-Lineargreifern wird die Aufnahme dieser Momente nämlich meist durch einen Linearführung erreicht, die eine L-Form aufweist und deren Hebelarm senkrecht zur Längsachse des Fingers verläuft. Dies hat eine Kraftumlenkung um 90° im Finger zur Folge, wofür dieser speziell auszulegen ist.

Die Lagerung des Zwischengliedes und des Basisgliedes kann einseitig mithilfe von Lagern erfolgen, die Quermomente aufnehmen können. Da der Durchmesser dieser Lagerungen groß ist und ein Maß für den Hebelarm darstellt, mit dem dies Lager die Quermomente aufnehmen können, können diese Lagerungen sehr große Quermomente aufnehmen. Hierdurch können mit dieser Lagerung größere Momente aufgenommen werden, als mit einem vergleichbaren Standard-Lineargreifer mit Linearführung.

Das Zwischenglied kann demgemäß also eine erste Kreisringscheibe aufweisen, die mittels des zweiten Unterlagers an dem Basisglied drehbar gelagert ist und eine zweite Kreisringscheibe aufweisen, die mittels des zweiten Oberlagers an dem Basisglied drehbar gelagert ist und die erste Kreisringscheibe durch einen Verbindungssteg mit der zweiten Kreisringscheibe starr verbunden ist.

Das Zwischenglied, insbesondere der Zapfen, gewährleistet eine Ausrichtung der Segmente, d.h. jeweils des Paares von oberem und unteren Basisglied und/oder des Paares von oberem und unteren Zwischenglied, beider Lagerungsebenen entlang der ersten Drehachse und der Segmente beider Lagerungsebenen entlang der zweiten Drehachse der beiden Lagerungsebenen. Bei einer Torsion der beiden ersten Lagerungen und einer Torsion der beiden zweiten Lagerungen wird das Zwischensegment auf Schub belastet, da die Drehachsen immer einen gewissen Versatz zu dem Zwischensegment aufweisen, mit dem die beiden Lagerungsebenen verbunden sind. Das Zwischensegment kann in seiner Form und der Lage des Teilsegments, an dem die Führungen angreifen, so gestaltet sein, dass es für beide Torsionsbewegungen möglichst stabil bezüglich der Schubverformungen ist.

Alternativ oder ergänzend zu einer derartigen Ausbildung des Zwischenglieds kann demgemäß auch das Basisglied eine dritte Kreisringscheibe aufweisen, die mittels des ersten Unterlagers an dem Greifergrundkörper drehbar gelagert ist und eine vierte Kreisringscheibe aufweisen, die mittels des ersten Oberlagers an dem Greifergrundkörper drehbar gelagert ist und die dritte Kreisringscheibe durch einen Verbindungssteg mit der vierten Kreisringscheibe starr verbunden ist.

In allen Ausführungen kann der Robotergreifer eine Einrichtung zur Umgehung von Singularitäten aufweisen, bei denen die erste Drehachse mit der dritten Drehachse fluchtet, aufweisend ein Zwangsmittel, das ausgebildet ist, eine Bewegung des Basisglieds um die erste Drehachse zu behindern, bei der die zweite Drehachse relativ zur ersten Drehachse unbeweglich ist, so dass eine von der Antriebsvorrichtung eingeleitete Antriebskraft im Bereich der Singularität dazu führt, dass die Drehbewegung der zweiten Drehachse größer ist als die der ersten.

Eine Lagerung auf einer Ebene mit mindestens zwei parallelen Drehachsen weist Singularitäten auf. Wenn die Abstände zwischen den drei seriell aufeinander folgenden Drehachsen gleich sind, gibt es eine Position, bei der zwei Drehachsen koaxial aufeinander liegen, in der beliebig viele Gelenkstellungen auftreten können. Beim Durchfahren der singulären Position mit der Backe entlang einer Bahn gibt es zwei Gelenkstellungen, welche die Gelenke einnehmen können. Dies hat zur Folge, dass bei einem führenden Antrieb der bewegten Backe die Winkelstellung der Gelenke nicht mehr eindeutig ist.

Damit die Gelenkbahnen eindeutig von außen über einen Antrieb mit einem Freiheitsgrad geschoben werden können, sind Zwangsbedingungen einzuführen. Solange sich die bewegte Backe nicht in der Singularität befindet, sind die sich einstellenden Gelenkwinkel beim Bewegen der Backe auf einer Bahn eindeutig. Beim Durchfahren der Singularität können jedoch zwei unterschiedliche Konfigurationen angefahren werden, die dann bei einem weiteren Verfahren wieder eindeutig sind.

Wenn die Abstände zwischen der ersten Drehachse und der zweiten Drehachse, und zwischen der zweiten Drehachse und der dritten Drehachse gleich groß sind, können in der Singularität beliebig viele Gelenkstellungen angefahren werden. Dies ist aber nur möglich, wenn das Basisglied durch eine externe Kraft gedreht wird, was im normalen Betrieb nicht erfolgt.

Damit auch bei einem Durchfahren der Singularität die Gelenkstellungen eindeutig werden, ist eine Bewegung des einen Drehgelenks gegenüber dem anderen Drehgelenk zu behindern. Eine solche Behinderung dieser passiv von außen angetriebenen Bewegungen kann über eine Mechanik auf unterschiedliche Weise erfolgen.

Beim Durchfahren der Singularität verlaufen beide Geraden zwischen der ersten Drehachse und der zweiten Drehachse, sowie der zweiten Drehachse und der dritten Drehachse parallel, auch wenn sie nicht gleich groß sind. Beim Schieben des Fingers über einen Antrieb, der an der Backe angreift, werden die Gelenke über ein Moment passiv bewegt, das sich aus der Antriebskraft und einem Hebelarm, der senkrecht auf der Bewegungsrichtung steht ergibt. Da in der betrachteten Singularität die Abstände zwischen den Drehachsen senkrecht auf der Bewegungsachse stehen, entsprechen die Abstände zwischen der ersten Drehachse und der zweiten Drehachse bzw. zwischen der zweiten Drehachse und der dritten Drehachse, den Hebelarmen für das Antriebsmoment der ersten und zweiten Drehachsenachse.

Wenn die Singularität durchfahren wird und die beiden Abstände zwischen den Drehachsen gleich oder ähnlich groß sind, das größere Lager z.B. durch seine Größe einen größeren Reibwiderstand aufweist, als das kleine Lager, dann wird die Gelenkbahn vermieden, in der das große Lager einen größeren Gelenkwinkel zurücklegen muss, als das kleine Lager, zugunsten der Gelenkbahn, in der das kleine Lager einen größeren Gelenkwinkel zurücklegen muss, als das große Lager.

Bei einem Weiterfahren können zwei Konfigurationen auftreten, wobei in der ersten Konfiguration das kleine Lager einen größeren Gelenkwinkel zurücklegt als das große Lager und in der anderen Konfiguration das große Lager einen größeren Gelenkwinkel zurücklegen muss, als das kleine Lager. Da das große Lager einen größeren Reibungswiderstand aufweist, als das kleine Lager, wird sich die Bahn einstellen, bei der sich beim kleineren Lager eine größere Drehbewegung als beim großen Lager ergibt.

Das Zwangsmittel kann also einen mit dem Greifergrundkörper verbundenen Reibkörper und einen mit dem Basisglied verbunden Gegenreibkörper aufweisen, wobei der Reibkörper und der Gegenreibkörper derart ausgebildet und angeordnet sind, dass bei einer Annäherung der ersten Drehachse an die dritte Drehachse der Reibkörper und der Gegenreibkörper in einen Reibkontakt treten, welcher ein Weiterdrehen des Basisglieds behindert.

Wenn sich die Backe in der Singularität befindet, berührt das eine Segment einen Widerstandkörper am Grundkörper, der in dieser Position die Drehreibung des großen Lagers erhöht und es in seiner Bewegung behindert. Aus diesem Grund wird sich ebenfalls die Situation einstellen, in der sich das kleine Lager einen größeren Gelenkwinkel verdreht.

Wenn die Abstände zwischen beiden Drehachsen gleich groß sind und die Backe auf einer Geraden verfahren wird, die durch den Mittelpunkt der ersten Lagerung führt, dann gibt es einen Punkt im zweiten Segment, der sich auch auf einer Geraden bewegt, die senkrecht auf der Bahn des bewegten Backe steht. Dieser Punkt ist der am Mittelpunkt der zweiten Lagerung gespiegelte Drehpunkt der dritten Lagerung.

Wenn sich die Gelenkmechanik in der Singularität befindet, und die jeweiligen Abstände zwischen benachbarten Drehachsen gleich groß sind, ist es möglich, dass sich das erste Segment und das zweite Segment gemeinsam bewegen, ohne dass sich die Position der dritten Drehachse verändert. Nach einem Überqueren der Singularität auf einer Bahn, kann die Bahn mit zwei unterschiedlichen Gelenkkonfigurationen angefahren werden. Hierfür muss der Punkt auf dem zweiten Segment auf die andere Seite der Geraden springen, auf der er verläuft. Dies kann durch eine Führung dieses Punktes auf der Geraden verhindert werden. An der Stelle des Punktes wird das zweite Segment mit einem Zapfen verbunden, der z.B. links und rechts von Anschlägen in der Basis des Greifers auf seiner Bahn gehaltente wird. Die Führung kann Kräfte in Richtung der Bewegung der Greiferbacke oder entgegen der Bewegung der Greiferbacke aufnehmen.

Das Zwangsmittel kann einen mit dem Zwischenglied verbundenen Zapfen und einen mit dem Greifergrundkörper verbundenen Gabelkörper aufweisen, der eine Ausnehmung umfasst, wobei der Gabelkörper und der Zapfen derart ausgebildet und angeordnet sind, dass bei einer Annäherung der dritten Drehachse an die erste Drehachse der Zapfen in die Ausnehmung des Gabelkörpers eingreift, um durch eine formschlüssige Kopplung des Greifergrundkörpers mit dem Zwischenglied ein gemeinsames Verdrehen von Zwischenglied und Basis zu verhindern.

Da das Zwangsmittel nur wirken muss, wenn sich die Greifermechanik in der zentralen Singularität befindet, kann dieses durch formschlaffe Elemente gebildet werden, die nur Kräfte in der singulären Gelenkstellung übertragen können. Eine Möglichkeit hierfür ist das Anbringen von zwei gegenüberliegenden Seilen zwischen dem Greifergrundkörper und dem Zapfen derart, dass die beiden Seile nur in der Position des Zapfens gestreckt sind, wenn sich die Gelenkmechanik in der Singularität befindet und der Zapfen damit von der ersten Drehachse maximal weit entfernt ist und darüber Kräfte auf den Zapfen übertragen werden können, die eine gemeinsame Rotation vom Zwischenglied und dem Basisglied verhindern.

In solchen Ausführungen mit beispielsweise formschlaffen Elementen, wie Seilen wird das zweite Segment nur beim Durchfahren der Singularität stabilisiert und damit sind die Gelenkwinkel in allen Orten der Bewegungsbahn eindeutig. Auch durch eine zusätzlich von außen aufgebrachte Kraft ist es nicht möglich andere Gelenkwinkel vorzugeben, da die Führung formschlüssig ist. Dies ist vorteilhaft gegenüber einer Stabilisierung durch Reibungskräfte, da diese durch zusätzliche Kräfte von außen auf den Greifer überbrückt werden könnten, was im Weiteren zu einem Verklemmen des Greifers führen könnte.

Der Zapfen kann durch den die erste Kreisringscheibe mit der zweiten Kreisringscheibe verbindenden Verbindungssteg gebildet werden.

Generell kann die Antriebsvorrichtung in allen Ausführungsformen und Varianten selbsthemmend ausgebildet sein.

Wenn beispielsweise die Stromversorgung am Robotergreifer unterbrochen wird, während ein Gegenstand gegriffen wurde, soll dieser sicher im Greifer verweilen, und darf nicht zu Boden fallen. Gewünscht wird daher, dass der bewegliche Greiferfinger nicht rücktreibbar ist. Die Lagerung des Fingers, wenn er von außen bewegt wird, darf in keiner Situation selbsthalten sein, da dies dazu führt, dass der Finger auch vom Antriebsmotor nicht mehr bewegt werden kann. Daher ist der Antriebsstrang zwischen Motor und dem bewegten Finger so zu gestalten, dass er nicht mehr rücktreibbar ist. Dies kann über einen Spindeltrieb mit der entsprechenden Steigung im Spindelgewinde und dem dazu passenden Reibungsverhalten ermöglicht werden. Weiterhin muss sichergestellt werden, dass die Verklemmung immer vom Motor aktiv gelöst werden kann.

Ganz allgemein betrachtet kann der erfindungsgemäße Robotergreifer ein oder mehrere der folgenden Merkmale aufweisen:
Das erste Drehgelenk, das zweite Drehgelenk, das dritte Drehgelenk und der Antriebsstrang sind in einer festen konstruktiven Konfiguration passiv, d.h. antriebslos miteinander gekoppelt. Insoweit weist der Robotergreifer nur einen einzigen Freiheitsgrad auf. Der Robotergreifer kann deshalb mit der nur einzigen Antriebsvorrichtung geöffnet bzw. geschlossen werden. Ein Öffnen des Robotergreifers erfolgt durch ein Wegbewegen des ersten (beweglichen) Greiferfingers von dem zweiten (feststehenden) Greiferfinger. Ein Schließen des Robotergreifers erfolgt durch ein Zubewegen des ersten (beweglichen) Greiferfingers auf den zweiten (feststehenden) Greiferfinger. Der erste Greiferfinger wird von dem einzigen Antriebsmotor des Robotergreifers bewegt. Durch die erfindungsgemäße Kopplung von erstem Drehgelenk, zweitem Drehgelenk und drittem Drehgelenk durch den Antrieb, kann eine robustere und steifere Mechanik geschaffen werden, als dies beispielsweise mit einer Linearführung möglich wäre. Das erste Drehgelenk, das zweite Drehgelenk und das dritte Drehgelenk können in einer dem Fachmann als solches bekannten Weise beispielsweise mittels Wälzlagern oder ggf. Gleitlagern sehr steif gelagert werden. Insgesamt können folglich sehr hohe Schließkräfte am Robotergreifer realisiert werden.

Sowohl der erste (bewegliche) Greiferfinger, als auch der zweite (feststehende) Greiferfinger können vorzugsweise von starren Stäben gebildet werden. Indem der Greiferfinger bzw. die Greiferfinger als starre Stäbe ausgebildet sind, können aufwändige Gelenke an den Greiferfingern entfallen und demgemäß kostengünstige und auch robuste Greiferfinger geschaffen werden, die zudem nur wenig anfällig für Störungen sind. Diese starren Stäbe können jedoch vielfältige Querschnittsformen aufweisen. Jeder der Greiferfinger kann auch mittels einer den jeweiligen Greiferfinger mit dem Robotergreifer bzw. dessen Greifergrundkörper oder Fingerträger verbindenden Kupplungsvorrichtung austauschbar am Robotergreifer befestigt sein. So können die Stäbe eine allgemeine zylindrische Außenmantelwand aufweisen und die Stäbe in einem senkrecht zu ihrer Längserstreckung verlaufenden Querschnitt beispielsweise eine kreisförmige, quadratische, rechteckige, dreieckige oder sonstige geometrische Form aufweisen. Insbesondere kann die zylindrische Außenmantelwand dieser Stäbe ein gerader Zylinder sein. Alle am Robotergreifer vorhandenen Greiferfinger können dieselbe Querschnittsform aufweisen. Alternativ kann wenigstens ein Greiferfinger eine andere Querschnittsform aufweisen, als der wenigstens eine andere Greiferfinger. Die am Robotergreifer vorhandenen Greiferfinger können aber auch individuelle, d.h. voneinander abweichende Querschnittsformen aufweisen.

In einer ersten grundlegenden Variante des Robotergreifers kann der erste Greiferfinger über das erste Drehgelenk, das zweite Drehgelenk und das dritte Drehgelenk bezüglich des Greifergrundkörpers verstellbar gelagert sein. Der zweite (feststehende) Greiferfinger ist lediglich an dem Greifergrundkörper starr befestigt. In einer anderen Variante können zwei starre Greiferfinger vorhanden sein, die beide in einem Abstand voneinander an dem Greifergrundkörpers befestigt sind. Ein solcher Robotergreifer weist demgemäß also insgesamt drei Greiferfinger auf, wobei der erste Greiferfinger relativ zu den beiden anderen am Greifergrundkörper starr befestigten Greiferfingern über das erste Drehgelenk, das zweite Drehgelenk und das dritte Drehgelenk verstellbar ist.

Generell kann der erste, bewegliche Greiferfinger mittels der Antriebsvorrichtung auf einer geraden Bahn auf den wenigstens einen zweiten, feststehenden Greiferfinger zu bewegt werden. Es lassen sich aber auch andere Arten von Bahnen erzeugen, auf denen sich der erste Greiferfinger auf den zweiten, feststehenden Greiferfinger zu und von diesem weg zubewegen vermag. Derartige andere Bahnformen können durch die Auswahl von unterschiedlich konstruierten Antriebsvorrichtungen erzeugt werden, ohne dass Änderungen an den Drehgelenken des Robotergreifers vorgenommen werden müssten.

Der Greifergrundkörper kann in sämtlichen Ausführungsvarianten einen Anschlussflansch aufweisen, der zur Befestigung des Robotergreifers an einem Werkzeugflansch eines Roboterarms ausgebildet ist. Auch wenn der Robotergreifer von anderen automatisierten Vorrichtung positioniert werden kann, so ist vorzugsweise jedoch vorgesehen, dass der Robotergreifers von einem Roboterarm im Raum bewegt wird, wobei der Roboterarm von einer Robotersteuerung automatisiert, d.h. insbesondere programmgesteuert bewegt werden kann.

Das Basisglied kann eine rotationssymmetrische Außenmantelwand aufweisen, an der das Basisglied vollständig innerhalb der Außenkontur des Greifergrundkörpers drehbar gelagert ist, das Zwischenglied des Robotergreifers eine rotationssymmetrische Außenmantelwand aufweisen, an der das Zwischenglied vollständig innerhalb der Außenkontur des Basisglieds drehbar gelagert ist, und/oder der Fingerträger des Robotergreifers eine rotationssymmetrische Außenmantelwand aufweisen, an der der Fingerträger vollständig innerhalb der Außenkontur des Zwischenglieds drehbar gelagert ist. Dies kann insbesondere bedeuten, dass nur die Lagerung jeweils innen liegt. Es kann jedoch auch sein, dass sich Segmente des Antriebsstrangs über mehrere Glieder erstrecken.

In einer weiteren speziellen Ausführungsvariante kann der Robotergreifer derart gestaltet, dass
- das erste Drehgelenk ein das Basisglied umgebendes erstes Lager aufweist, insbesondere erstes Wälzlager mit einem Innenring, einer Innenringlaufbahn für Wälzkörper, einem Außenring und einer Außenringlaufbahn aufweist, wobei der Innenring an der rotationssymmetrischen Außenmantelwand des Basisglieds befestigt ist oder die Innenringlaufbahn an der rotationssymmetrischen Außenmantelwand des Basisglieds ausgebildet ist,
- das zweite Drehgelenk ein das Zwischenglied umgebendes zweites Lager aufweist, insbesondere zweites Wälzlager mit einem Innenring, einer Innenringlaufbahn für Wälzkörper, einem Außenring und einer Außenringlaufbahn aufweist, wobei der Innenring an der rotationssymmetrischen Außenmantelwand des Zwischenglieds befestigt ist oder die Innenringlaufbahn an der rotationssymmetrischen Außenmantelwand des Zwischenglieds ausgebildet ist, und
- das dritte Drehgelenk ein den Fingerträger umgebendes drittes Lager aufweist, insbesondere drittes Wälzlager mit einem Innenring, einer Innenringlaufbahn für Wälzkörper, einem Außenring und einer Außenringlaufbahn aufweist, wobei der Innenring an der rotationssymmetrischen Außenmantelwand des Fingerträgers befestigt ist oder die Innenringlaufbahn an der rotationssymmetrischen Außenmantelwand des Fingerträgers ausgebildet ist.

Durch eine solche Lagergestaltung, insbesondere Wälzlagergestaltung oder Gleitlagergestaltung kann eine besonders steife Anordnung von erstem Drehgelenk, zweitem Drehgelenk und drittem Drehgelenk erreicht werden. Demgemäß ist das zweite Wälzlager, insbesondere in der unteren Lagerebene, insoweit vollständig von dem ersten Wälzlager umgeben und das dritte Wälzlager, insbesondere in der unteren Lagerebene, vollständig vom zweiten Wälzlager und in Folge auch vollständig vom ersten Wälzlager umgeben. In einer abgewandelten Ausführungsvariante des Robotergreifers können ein oder mehrere der Wälzlager, insbesondere alle Wälzlager durch Gleitlager ersetzt sein.

Zusammenfassend wird durch den erfindungsgemäßen Robotergreifer eine Kinematik für einen Greifer mit einer Lagerung geschaffen, die aus drei seriell ineinander geschachtelten Lagerungen und einer von diesen Lagerungen separaten Antriebsvorrichtung besteht. Die Antriebsvorrichtung gibt dem Greiferfinger eine Bewegung bestimmte vor und führt aktiv den bewegten Greiferfinger. Die Lagerung hingegen ermöglicht es dem bewegten Greiferfinger der von der Antriebsvorrichtung vorgegebenen Bahn zu folgen. Ein Antrieb über die einzelnen Lagerungen erfolgt nicht. Der Greifer hat einen einzigen Freiheitsgrad, der von der Antriebsvorrichtung vorgegeben wird.

Die Kinematik des Greifers ermöglicht die Führung einer beweglichen Backe. Die zweite Backe kann starr mit der Basis des Greifers verbunden sein. Der gegriffene Gegenstand wird von der bewegten Backe gegen die starre Backe gedrückt. Diese Verspannung ermöglicht eine Aufnahme von Momenten. Bei der durch die Antriebsvorrichtung angetriebenen Bewegung kann es sich um eine lineare Bewegung handeln. Die drei Lagerungen können jeweils einzeln oder doppelt mit Parallelversatz am Robotergreifer ausgebildet sein. Dies kann zweckmäßig sein, wenn die Lagerungen die Quermomente konstruktiv aufnehmen sollen. Bei den Lagerungen kann es sich im Wälz- oder Gleitlager handeln. Wenn die Lagerungen doppelt mit Parallelversatz ausgebildet werden, kann durch eine starre Verbindung jeweils zweier zueinander versetzter Segmenten erreicht werden, dass die jeweils zugeordneten Segmente der parallelen Lagerungen sich nicht gegeneinander verdrehen. Dies ermöglicht der Lagerung der Backen eine gewisse Steifigkeit zu verleihen. Die Lagerung kann die beiden Kippmomente aufnehmen, die auf die angetrieben Backe wirkt. Durch diese Anordnung können die aufzunehmenden Kippmomente jedoch groß werden. Das Moment um die Längsachse der Backe kann von der Kinematik aufgenommen werden, welche die Antriebsbewegung an den Finger weitergibt. Alternativ kann das Moment um die Längsachse der Backe von einer zusätzlichen Führung des bewegten Fingers aufgenommen werden. Die Kräfte in Längsrichtung der Backe und die Kraft die senkrecht zur Bewegungsrichtung und parallel zur Greifergrundebene auf den bewegten Finger wirken, können von der Kinematik aufgenommen werden, welche die Antriebsbewegung an den Finger weitergibt. Alternativ können die Kräfte in Längsrichtung der Backe und die Kraft die senkrecht zur Bewegungsrichtung und parallel zur Greifergrundebene auf den bewegten Finger wirken, von einer zusätzlichen Führung des bewegten Fingers aufgenommen werden.

Um mit Singularitäten in der geführten Bewegung von mindestens zwei parallelen Drehachsen umgehen zu können, können in dem Greifer mechanische Zwangsbedingungen enthalten sein. Eine mechanische Zwangsbedingung kann so aussehen, dass die Bewegung der einen Lagerung aufgrund ihrer Größe oder ihres Lagerungsprinzips in der singulären Position gegenüber der anderen Lagerung behindert wird. Eine mechanische Zwangsbedingung kann aber auch so aussehen, dass die eine Lagerung in der Winkelposition der Singularität durch Dämpfer in der Bewegung behindert wird, der z.B. durch einen lokalen Reibkontakt erzeugt wird. Eine mechanische Zwangsbedingung kann des Weiteren so aussehen, dass sich auf dem zweiten Segment ein Zapfen befinden kann, der sich an der Stelle befindet, die bei einer Bewegung der Greiferbacke entlang einer Geraden sich selber auf einer Geraden bewegt. Dieser Zapfen kann auf seinem Weg von einer Führung entlang seinem Bewegungsweg gehalten werden. Diese Führung kann sich über den gesamten Weg, den der Zapfen zurücklegt, oder entlang eines Teilweges erstrecken oder nur an einer Stelle vorhanden sein, die sich einstellt, wenn die Kinematik sich in einer Singularität befindet. Der Zapfen kann auch in der singulären Position, wie bereits erwähnt, beispielsweise von Seilzügen gehalten werden. In einer solchen Ausführungsform eines Zwangsmittels mit zwei Seilen sind jeweils die einen Seilenden an dem Verbindungssteg bzw. an einem Zapfen befestigt. Die jeweils anderen Seilenden sind an dem Basisglied befestigt. Bei einer Bewegung des Verbindungsstegs bzw. des Zapfens auf einer Bahn, z.B. einer Geraden, werden beide Seile in Abhängigkeit des Kontaktpunktes des Seils mit dem Zapfen von diesem aufgewickelt. Sie müssen dabei aber nicht unter Zugspannung stehen, sondern können durchhängen. Nur in der Singularitätsposition des Verbindungsstegs bzw. des Zapfens sind beide Seile gespannt, um den Verbindungssteg bzw. den Zapfen in seiner Position zu halten. Das Zwangsmittel kann demgemäß einen mit dem Zwischenglied verbundenen Zapfen und zwei Seile umfassen, die jeweils ein erstes Seilende aufweisen, die beide an dem Zapfen befestigt sind und wobei die beiden jeweils anderen Seilenden an dem Basisglied befestigt sind.

Wenn der Antriebsstrang zwischen Antriebsmotor und bewegten Finger nicht rücktreibbar ausgeführt wird, dann kann sichergestellt werden, dass die Greifkraft auch bei einem Stromausfall erhalten bleibt. Der Greifer kann mit adaptiven und/oder flexiblen Backen als Greiferfinger bestückt sein.

Der Antriebsvorrichtung kann zum kraft- und/oder momentgeregelten Ansteuern ausgebildet sein.

Bei einem kraft- und/oder momentgeregelten Ansteuern der Antriebsvorrichtung des Robotergreifers kann der Robotergreifers insoweit hinsichtlich seiner Steifigkeit parametriert sein. In allen Ausführungen kann dazu das kraft- und/oder momentgeregelten Ansteuern der Antriebsvorrichtung des Robotergreifers mittels Impedanzregelung oder Admittanzregelung erfolgen. Eine Greifersteuerung oder eine Robotersteuerung kann eingerichtet sein, eine für die sichere Mensch-Roboter-Kooperation geeignete Nachgiebigkeit des ersten Greiferfingers am Robotergreifer insbesondere mittels Impedanzregelung oder Admittanzregelung zu erzeugen. In einer derartigen Nachgiebigkeitsregelung kann ein Handfahrbetrieb auch bedeuten, dass der Robotergreifer von einem Werker handgeführt bewegt werden kann, d.h. insbesondere auch der erste Greiferfinger des Robotergreifers manuelle verstellt werden kann.

Konkrete Ausführungsbeispiele der Erfindung sind in der nachfolgenden Beschreibung unter Bezugnahme auf die beigefügten Figuren näher erläutert. Konkrete Merkmale dieser exemplarischen Ausführungsbeispiele können unabhängig davon, in welchem konkreten Zusammenhang sie erwähnt sind, gegebenenfalls auch einzeln oder in weiteren Kombinationen betrachtet, allgemeine Merkmale der Erfindung darstellen.

Es zeigen:
- Fig. 1: eine perspektivische Ansicht eines Industrieroboters in Art eines Sechsachs-Knickarmroboters;
- Fig. 2: eine perspektivische Ansicht eines Robotergreifers mit einem ersten, verstellbaren Greiferfinger und einem zweiten, starren Greiferfinger;
- Fig. 3: eine Draufsicht von unten auf den Robotergreifer gemäß Fig.2;
- Fig. 4: eine schematische Schnittdarstellung des Robotergreifers gemäß Fig. 2;
- Fig. 5: eine Transparentdarstellung des Robotergreifers gemäß Fig. 2 mit der erfindungsgemäßen Antriebsvorrichtung;
- Fig. 6: eine Schnittdarstellung des Robotergreifers gemäß Fig. 2 mit der erfindungsgemäßen Antriebsvorrichtung;
- Fig. 7: eine perspektivische Teildarstellung des Inneren des Robotergreifers gemäß Fig. 2 mit der erfindungsgemäßen Antriebsvorrichtung;
- Fig. 8: eine perspektivische Teildarstellung des Inneren des alternativen Robotergreifers mit einem Oberlager, das stabförmige Hebel aufweist,
- Fig. 9: eine perspektivische Schnittdarstellung des Inneren eines gegenüber Fig. 8 abgewandelten Robotergreifers, bei dem der bewegliche Greiferfinger am jeweiligen Oberlager und Unterlager jeweils zwischen zwei parallelen Linearführungen geführt ist,
- Fig. 10: eine schematische Darstellung eines beispielhaften Robotergreifers in einer Singularitätsstellung mit einem Zwangsmittel, das zwei Seile umfasst,
- Fig. 11: eine schematische Darstellung eines reibschlüssigen Zwangsmittels des Robotergreifers;
- Fig. 12: eine schematische Darstellung eines formschlüssigen Zwangsmittels des Robotergreifers; und
- Fig. 13-17: eine Abfolge von Einzelsituationen von räumlichen Positionen eines Gabelkörpers und eines Zapfens eines speziellen formschlüssigen Zwangsmittels des Robotergreifers.

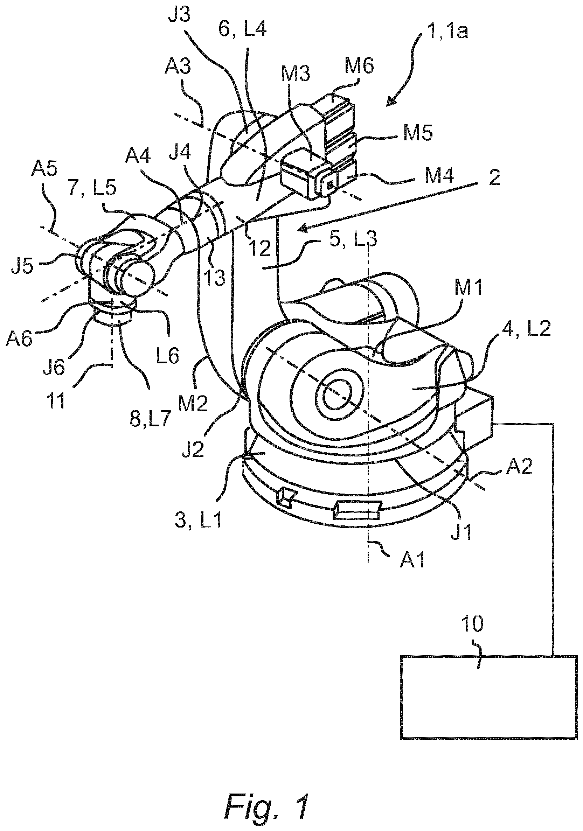

Die Fig. 1 zeigt einen Roboter 1, der einen Roboterarm 2 und eine Robotersteuerung 10 aufweist. Der Roboterarm 2 umfasst im Falle des vorliegenden Ausführungsbeispiels mehrere, nacheinander angeordnete und mittels Gelenke J1 bis J6 drehbar miteinander verbundene Glieder L1 bis L7.

Die Robotersteuerung 10 des Roboters 1 ist ausgebildet bzw. eingerichtet, ein Roboterprogramm auszuführen, durch welches die Gelenke J1 bis J6 des Roboterarms 2 gemäß des Roboterprogramms automatisiert oder in einem Handfahrbetrieb automatisch verstellt bzw. drehbewegt werden können. Dazu ist die Robotersteuerung 10 mit ansteuerbaren elektrischen Motoren M1 bis M6 verbunden, die ausgebildet sind, die Gelenke J1 bis J6 des Roboters 1 zu verstellen.

Bei den Gliedern L1 bis L7 handelt es sich im Falle des vorliegenden Ausführungsbeispiels eines Industrieroboters 1a um ein Gestell 3 und ein relativ zum Gestell 3 um eine vertikal verlaufende Achse A1 drehbar gelagertes Karussell 4. Weitere Glieder des Roboterarms 2 sind eine Schwinge 5, ein Armausleger 6 und eine vorzugsweise mehrachsige Roboterhand 7 mit einer als Werkzeugflansch 8 ausgeführten Befestigungsvorrichtung zum Befestigen eines erfindungsgemäßen Robotergreifers 11. Die Schwinge 5 ist am unteren Ende, d.h. an dem Gelenk J2 der Schwinge 5, das auch als Schwingenlagerkopf bezeichnet werden kann, auf dem Karussell 4 um eine vorzugsweise horizontale Drehachse A2 schwenkbar gelagert.

Am oberen Ende der Schwinge 5 ist an dem ersten Gelenk J3 der Schwinge 5 wiederum um eine ebenfalls vorzugsweise horizontale Achse A3 der Armausleger 6 schwenkbar gelagert. Dieser trägt endseitig die Roboterhand 7 mit ihren vorzugsweise drei Drehachsen A4, A5, A6. Die Gelenke J1 bis J6 sind durch jeweils einen der elektrischen Motoren M1 bis M6 über die Robotersteuerung 10 programmgesteuert antreibbar. Generell kann dazu zwischen jedem der Glieder L1 bis L7 und dem jeweils zugeordneten elektrischen Motoren M1 bis M6 ein Getriebe vorgesehen sein.

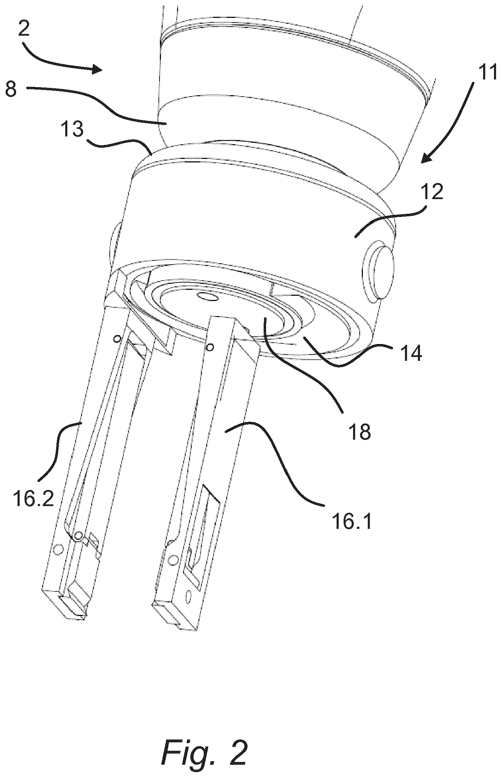

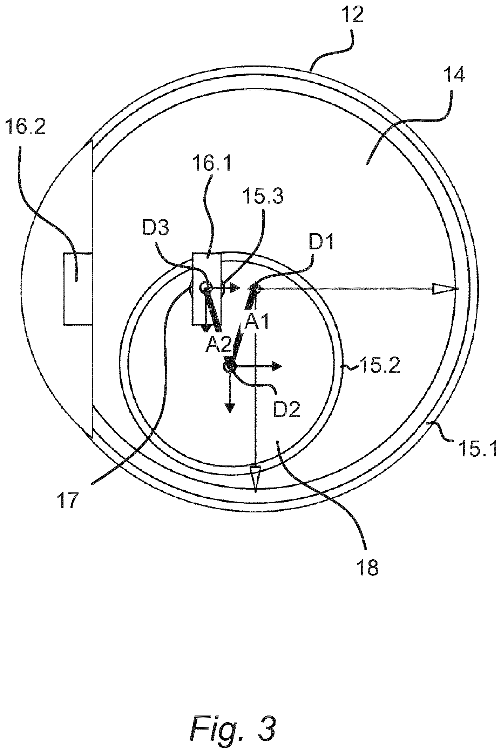

Die Fig. 2 zeigt eine Ausführungsform eines erfindungsgemäßen Robotergreifers 11, der einen ersten Greiferfinger 16.1 und einen zweiten Greiferfinger 16.2 aufweist. Der Robotergreifer 11 umfasst einen Greifergrundkörper 12, ein Basisglied 14, welches bezüglich des Greifergrundkörpers 12 drehbar gelagert ist, und ein Zwischenglied 18, welches bezüglich des Basisglieds 14 drehbar gelagert ist. Der Robotergreifer 11 umfasst außerdem einen Fingerträger 17 (Fig.3), der den ersten Greiferfinger 16.1 trägt und der bezüglich des Zwischenglieds 18 drehbar gelagert ist. Der Robotergreifer 11 weist einen Anschlussflansch 13 auf, der zur Befestigung des Robotergreifers 11 an dem Werkzeugflansch 8 des Roboterarms 2 ausgebildet ist.

In der Fig. 3 ist der Robotergreifer 11 in einer Draufsicht von unten gezeigt, d.h. die Greiferfinger 16.1 und 16.2 weisen aus der Zeichnungsebene entgegen der Blickrichtung nach vorne heraus. Der Robotergreifer 11 weist den ersten Greiferfinger 16.1 und den zweiten Greiferfinger 16.2 auf, sowie den Greifergrundkörper 12 und das Basisglied 14. Das Basisglied 14 ist mittels eines ersten Drehgelenks 15.1 um eine erste Drehachse D1 drehbar bezüglich des Greifergrundkörpers 12 gelagert. Das Zwischenglied 18 ist mittels eines zweiten Drehgelenks 15.2 bezüglich des Basisglieds 14 drehbar gelagert und zwar um eine zweite Drehachse D2, die parallel zur ersten Drehachse D1 ausgerichtet und in einem konstanten ersten Abstand A1 von der ersten Drehachse D1 angeordnet ist. Der Fingerträger 17, der den ersten Greiferfinger 16.1 trägt ist mittels eines dritten Drehgelenks 15.3 bezüglich des Zwischenglieds 18 drehbar gelagert und zwar um eine dritte Drehachse D3, die parallel sowohl zur ersten Drehachse D1 als auch zur zweiten Drehachse D2 ausgerichtet und in einem konstanten zweiten Abstand A2 von der zweiten Drehachse D2 angeordnet ist.

In dieser Ausführungsform bilden die Glieder des Robotergreifers 11, welche durch den Greifergrundkörper 12, das Basisglied 14, das Zwischenglied 18 und dem Fingerträger 17 gebildet werden, eine kinematische Kette von Gliedern, die durch das erste Drehgelenk 15.1, das zweite Drehgelenk 15.2 und das dritte Drehgelenk 15.3 drehbar verstellt werden können. Die drei Drehachsen D1, D2 und D3 des ersten Drehgelenk 15.1, des zweiten Drehgelenks 15.2 und des dritten Drehgelenks 15.3 sind dabei parallel zueinander ausgerichtet. Im Ergebnis kann dadurch der auf dem Fingerträger 17 montierte erste Greiferfinger 16.1 in der Ebene der zweiten Stirnseite des Greifergrundkörpers 12 auf einer Bahn auf den feststehenden zweiten Greiferfinger 16.2 zu bewegt werden bzw. von diesem weg bewegt werden.

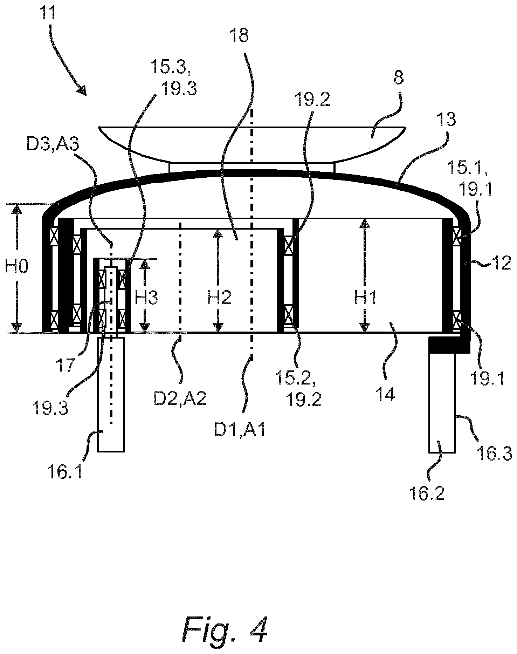

Das Basisglied 14 weist eine rotationssymmetrische Außenmantelwand auf, an der das Basisglied 14 vollständig innerhalb der Außenkontur des Greifergrundkörpers 12 drehbar gelagert ist, wie dies insbesondere in Fig. 4 gezeigt ist. Das Zwischenglied 18 des Robotergreifers 11 weist eine rotationssymmetrische Außenmantelwand auf, an der das Zwischenglied 18 vollständig innerhalb der Außenkontur des Basisglieds 14 drehbar gelagert ist. Der Fingerträger 17 des Robotergreifers 11 weist eine rotationssymmetrische Außenmantelwand auf, an der der Fingerträger 17 vollständig innerhalb der Außenkontur des Zwischenglieds 18 drehbar gelagert ist.

Wie insbesondere in Fig. 4 auch ersichtlich ist, weist das Basisglied 14 in einer speziellen Ausführungsvariante eine in Richtung der ersten Drehachse D1 weisende Bauhöhe H1 auf, die höchstens so groß ist, wie die in Richtung der ersten Drehachse D1 weisenden Bauhöhe H0 des Greifergrundkörpers 12. Das Zwischenglied 18 des Robotergreifers 11 weist dabei auch eine in Richtung der zweiten Drehachse D2 weisende Bauhöhe H2 auf, die höchstens so groß ist, wie die in Richtung der zweiten Drehachse D2 weisenden Bauhöhe H1 des Basisglieds 14. Der Fingerträger 17 des Robotergreifers 11 weist eine in Richtung der dritten Drehachse D3 weisende Bauhöhe H3 auf, die höchstens so groß ist, wie die in Richtung der dritten Drehachse D3 weisenden Bauhöhe H2 des Zwischenglieds 18.

In dieser speziellen Ausführungsvariante weist beispielsweise das erste Drehgelenk 15.1 ein das Basisglied 14 umgebendes erstes Wälzlager 19.1 mit einem Innenring, einer Innenringlaufbahn für Wälzkörper, einem Außenring und einer Außenringlaufbahn auf, wobei der Innenring an der rotationssymmetrischen Außenmantelwand des Basisglieds 14 befestigt ist. Alternativ kann die Innenringlaufbahn an der rotationssymmetrischen Außenmantelwand des Basisglieds 14 ausgebildet sein.

Dabei weist das zweite Drehgelenk 15.2 ein das Zwischenglied 18 umgebendes zweites Wälzlager 19.2 mit einem Innenring, einer Innenringlaufbahn für Wälzkörper, einem Außenring und einer Außenringlaufbahn auf, wobei der Innenring an der rotationssymmetrischen Außenmantelwand des Zwischenglieds 18 befestigt ist. Alternativ kann die Innenringlaufbahn an der rotationssymmetrischen Außenmantelwand des Zwischenglieds 18 ausgebildet sein.

Außerdem weist das dritte Drehgelenk 15.3 ein den Fingerträger 17 umgebendes drittes Wälzlager 19.3 mit einem Innenring, einer Innenringlaufbahn für Wälzkörper, einem Außenring und einer Außenringlaufbahn auf, wobei der Innenring an der rotationssymmetrischen Außenmantelwand des Fingerträgers 17 befestigt ist. Alternativ kann die Innenringlaufbahn an der rotationssymmetrischen Außenmantelwand des Fingerträgers 17 ausgebildet sein.

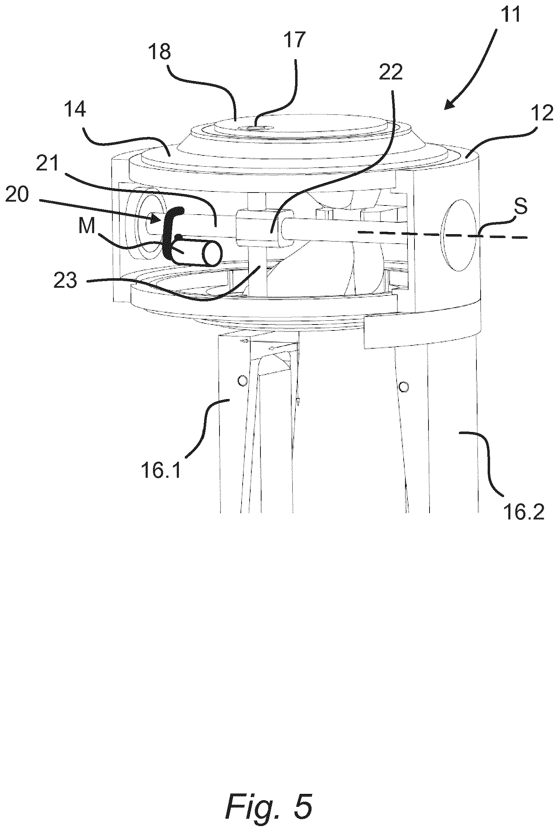

Wie aus Fig. 5 bis Fig. 7 ersichtlich, weist der erfindungsgemäße Robotergreifer 11 eine von dem ersten Drehgelenk 15.1, dem zweiten Drehgelenk 15.2 und dem dritten Drehgelenk 15.3 separate Antriebsvorrichtung 20 auf, die sich gegen den Greifergrundkörper 12 abstützt und die ausgebildet ist, den Fingerträger 17 relativ zum zweiten Greiferfinger 16.2 mit einer Antriebskraft zu verstellen, die über die Antriebsvorrichtung 20 in den Fingerträger 17 eingeleitet wird. Der zweite Greiferfinger 16.2 ist bezüglich des Greifergrundkörpers 12 feststehend angeordnet.

Die Antriebsvorrichtung 20 weist in der dargestellten Ausführungsform einen Motor M und eine am Greifergrundkörper 12 um eine Spindelachse S drehbar gelagerte und von dem Motor M drehangetriebene Antriebsspindel 21 auf. Auf der Antriebsspindel 21 ist eine Abtriebs-Spindelmutter 22 entlang der Spindelachse S linear verstellbar gelagert. Die Abtriebs-Spindelmutter 22 ist zum Bewegen des Fingerträgers 17 durch ein Antreiben des Motors M an den Fingerträger 17 angekoppelt. Der Fingerträger 17 ist über eine Stange 23 starr mit der Abtriebs-Spindelmutter 22 verbunden.

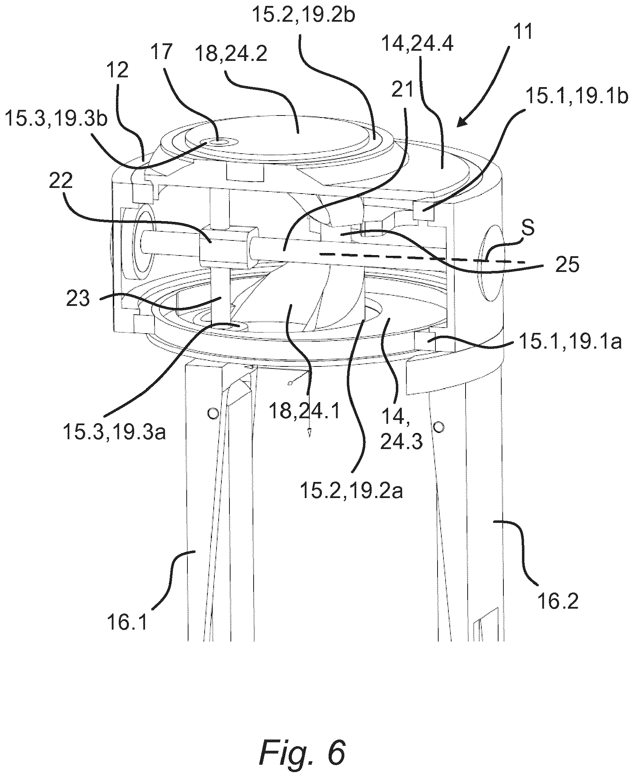

Insbesondere die Fig. 6 zeigt ein Ausführungsbeispiel mit zweiteiligen Lagern. Das erste Drehgelenk 15.1 weist ein das Basisglied 14 umgebendes erstes Unterlager 19.1a auf, das auf einer dem Fingerträger 17 nahen Bauhöhe angeordnet ist und ein zum ersten Unterlager 19.1a beabstandetes, das Basisglied 14 umgebendes erstes Oberlager 19.1b auf, das auf einer dem Fingerträger 17 fernen Bauhöhe angeordnet ist. Das zweite Drehgelenk 15.2 weist ein das Zwischenglied 18 umgebendes zweites Unterlager 19.2a auf, das auf einer dem Fingerträger 17 nahen Bauhöhe angeordnet ist und ein zum zweiten Unterlager 19.2a beabstandetes, das Zwischenglied 18 umgebendes zweites Oberlager 19.2b auf, das auf einer dem Fingerträger 17 fernen Bauhöhe angeordnet ist. Das dritte Drehgelenk 15.3 weist ein den Fingerträger 17 umgebendes drittes Unterlager 19.3a auf, das auf einer dem Fingerträger 17 nahen Bauhöhe angeordnet ist und ein zum dritten Unterlager 19.3a beabstandetes, den Fingerträger 17 umgebendes drittes Oberlager 19.3b auf, das auf einer dem Fingerträger 17 fernen Bauhöhe angeordnet ist.

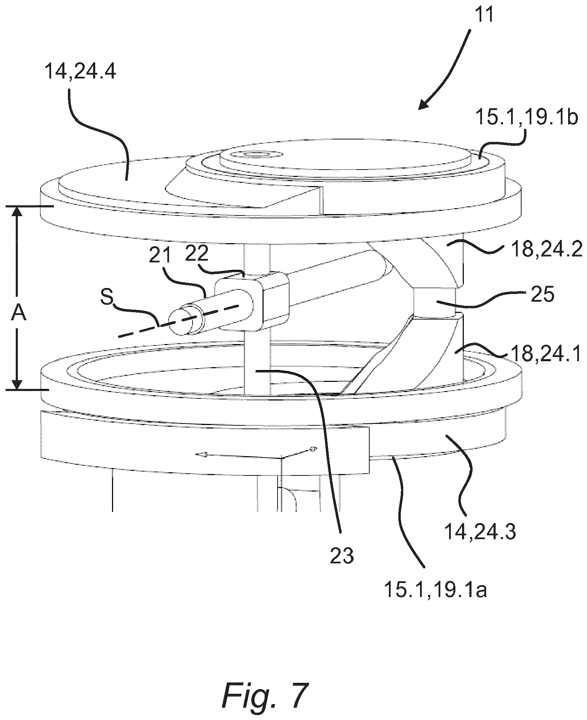

Das Zwischenglied 18 weist eine erste Kreisringscheibe 24.1 auf, die mittels des zweiten Unterlagers 19.2a an dem Basisglied 14 drehbar gelagert ist und eine zweite Kreisringscheibe aufweist, die mittels des zweiten Oberlagers 19.2b an dem Basisglied 14 drehbar gelagert ist und die erste Kreisringscheibe 24.1 durch einen Zwischenglied-Verbindungssteg 25 mit der zweiten Kreisringscheibe 24.2 starr verbunden ist, wie dies in Fig. 6 und insbesondere auch in Fig. 7 dargestellt ist.

Das Basisglied 14 weist im Falle des vorliegenden Ausführungsbeispiels eine dritte Kreisringscheibe 24.3 auf, die mittels des ersten Unterlagers 19.1a an dem Greifergrundkörper 12 drehbar gelagert ist und eine vierte Kreisringscheibe aufweist, die mittels des ersten Oberlagers 19.1b an dem Greifergrundkörper 12 drehbar gelagert ist und die dritte Kreisringscheibe 24.3 unmittelbar durch einen eigenen, nicht dargestellten Basisglied-Verbindungssteg oder mittelbar über den Zwischenglied-Verbindungssteg 25 des Zwischenglieds 18 mit der vierten Kreisringscheibe 34.4 starr verbunden ist. Das erste Unterlager 19.1a ist in einem Abstand A vom ersten Oberlager 19.1b angeordnet.

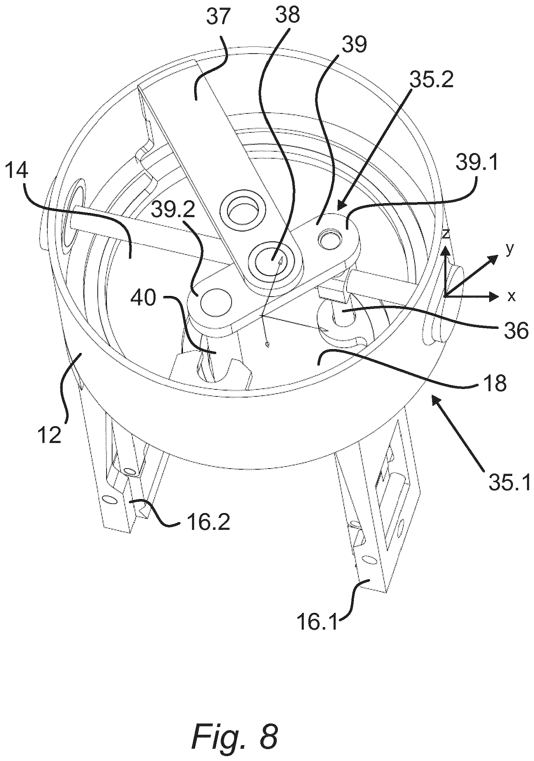

Die Fig. 8 zeigt eine alternative Lagerungsart, die aus einem Paar von Lagerungseinheiten 35.1, 35.2 gebildet wird, wobei die eine Lagerungseinheit 35.2 (in z-Richtung) in einer oberen Ebene (Oberlager) und die andere Lagerungseinheit 35.1 (in z-Richtung) in einer unteren Ebene (Unterlager) angeordnet ist. Die Innendurchmesser der Lager der Lagerungseinheit 35.1 in der unteren Eben sind so groß, dass die Lagerung des Zwischenglieds 18 den Fingerträger 17 umschließt und die Lagerung des Basisglieds 14 das Zwischenglied 18 so umschließt, dass der Fingerträger 17, der auf einem Bauteil 36 befestigt ist, das durch die Lagerung der unteren Ebene zur Abtriebs-Spindelmutter 22 reicht, auf der durch den Antrieb 20 (analog Fig. 5) vorgegebenen Bahn verfahren kann. Die Innendurchmesser der Lager der Lagerungseinheit 35.2 in der oberen Ebene können einen kleineren Durchmesser aufweisen, da sie die seriell nachfolgenden Lager nicht umschließen müssen, da in der oberen Lagerungsebene kein Bauteil auf der Fingerachse des bewegten Fingers die obere Lagerungsebene überquert. Das jeweilige Paar (Oberlager und Unterlager) von Lagerungseinheiten 35.1, 35.2 des Basisglieds 14 und des Zwischenglieds 18 fluchten jeweils miteinander.

Die obere Lagerungseinheit 35.2 kann demgemäß einen am Basisglied 14 befestigten L-förmigen Bügel 37 aufweisen, an dessen freiem Ende ein erstes Drehlager 38 angeordnet ist. An diesem ersten Drehlager 38 ist ein zweiarmiger Hebel 39 gelagert, der an seinem ersten Hebelarm 39.1 die Abtriebs-Spindelmutter 22 trägt und an seinem zweiten Hebelarm 39.2 über eine Stange 40 mit dem Zwischenglied 18 der unteren Lagerungseinheit 35.1 verbunden ist.

Die Aufnahme der Momente um die x-Achse und y-Achse kann über verschiedenen Maßnahmen erfolgen. Die Lagerung des Basisgliedes 14, des Zwischenglieds 18 und der Fingerträgers 17 kann so gestaltet sein, dass diese Segmente aufgrund eines Moments am bewegten Greiferfinger 16.1 um die x- oder y-Achse nicht zueinander gekippt werden können, was durch Lagerungen erreicht werden kann, die die Momente um die x-Achse und Y-Achse aufnehmen. Beim Einbau von zwei Lagerungseinheiten ist sicher zu stellen, dass die beiden Ebenen des Basisglieds 14 und die beiden Ebenen des Zwischenglieds 18 nicht zueinander um ihre Drehachse tordieren können. Dies kann durch den Einsatz von Lagern erreicht werden, die die Momente um die x-Achse und y- Achse aufnehmen, weiterhin kann dies dadurch erfolgen, dass die beiden Ebenen des Basisglieds 14 und die beiden Ebenen des Zwischenglieds 18 so miteinander verbunden sind, dass deren Torsion verhindert wird. Weiterhin kann dies dadurch verhindert werden, dass die Mechanik die sich durch die Gelenke ergibt Zapfen enthält, deren Bewegung durch Anschläge am Greifergrundkörper 12 eingeschränkt wird.

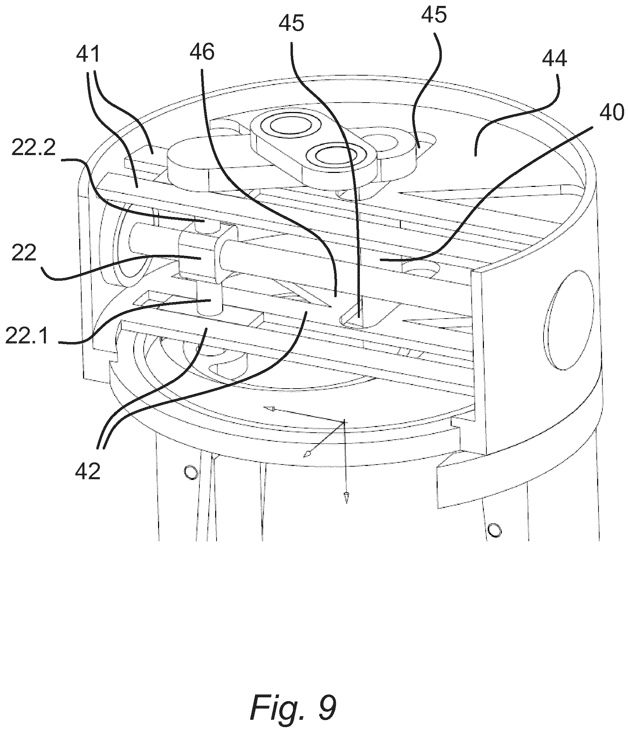

Wie in Fig. 9 näher gezeigt, kann die Abtriebs-Spindelmutter 22 zwei gegenüberliegende Zapfen 22.1 und 22.2 aufweisen, die in jeweils einem Paar von parallel voneinander beabstandet angeordneten oberen Linearführungen 41 und einem Paar von parallel voneinander beabstandet angeordneten unteren Linearführungen 42 geführt sind. Eine weitere Versteifung ist in der Ausführungsvariante gemäß Fig. 9 dadurch realisiert, dass die Stange 40 einen Zwischenkörperverbindungssteg bildet, der auf der oberen Ebene und gleichzeitig auf der unteren Ebene, also beidseitig von einer Führungsnut 45, insbesondere in Art jeweils eines Langlochs, gehalten wird, die in einer mit dem Greifergrundkörper 12 fest verbundenen Deckenwand 44 und Bodenwand 46 ausgebildet sind.

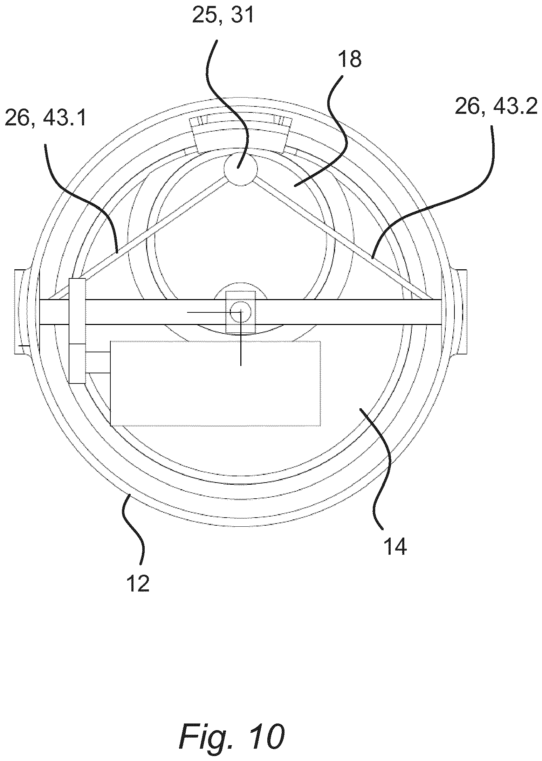

Die Fig. 10 zeigt eine beispielhafte Ausführungsform eines Zwangsmittels in Form von zwei Seilen 43.1 und 43.2, die jeweils ein erstes Seilende aufweisen, das an dem Zwischenglied-Verbindungssteg 25 bzw. an dem Zapfen 31 befestigt ist. Das jeweils andere Seilende ist an dem Basisglied 14 befestigt. Bei einer Bewegung des Zwischenglied-Verbindungsstegs 25 bzw. des Zapfens 31 auf einer Bahn, bspw. einer Geraden, können sich je nach Drehrichtung die Seile an dem Zwischenglied-Verbindungssteg 25 bzw. dem Zapfen 31 anlegen, d.h. am Umfang des Zapfens "aufwickeln". Nur in der in Fig. 10 dargestellten Singularitätsposition des Zwischenglied-Verbindungsstegs 25 bzw. des Zapfens 31 sind beide Seile 43.1 und 43.2 gespannt, um den Zwischenglied-Verbindungssteg 25 bzw. den Zapfen 31 in seiner Position zu halten.

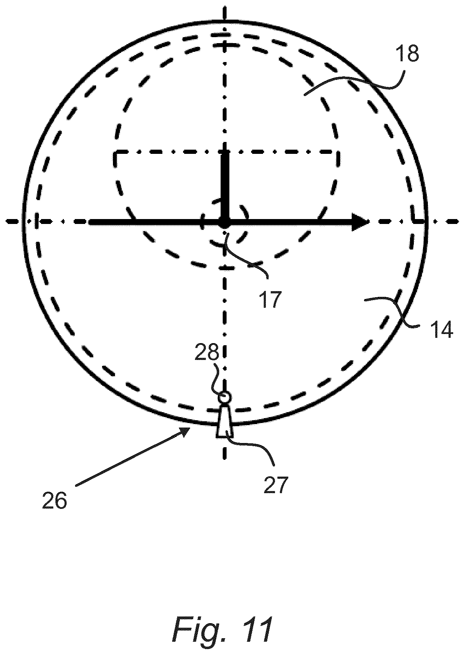

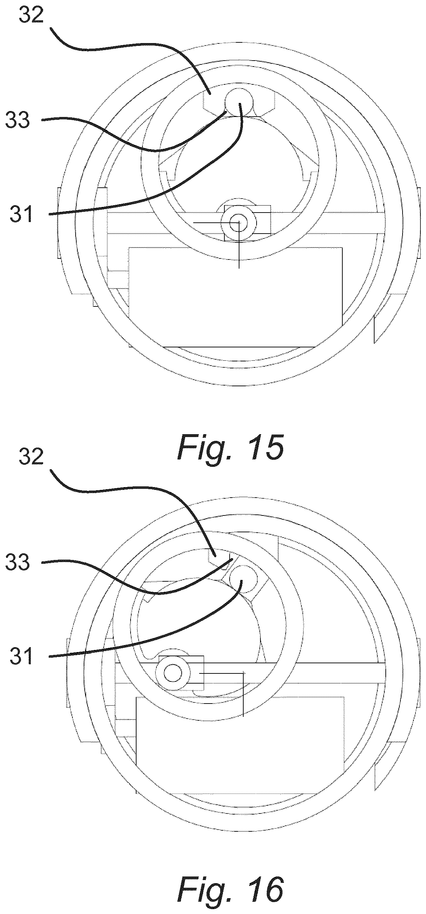

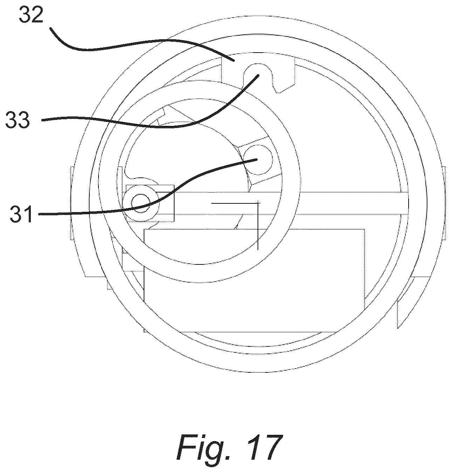

Die Fig. 11 bis Fig. 17 zeigen verschiedene Beispiele bei denen der Robotergreifer 11 eine Einrichtung zur Umgehung von Singularitäten aufweist, bei denen die erste Drehachse D1 mit der dritten Drehachse D3 fluchtet, aufweisend ein Zwangsmittel 26, das ausgebildet ist, eine Bewegung des ersten Drehgelenks 15.1 oder des zweiten Drehgelenks 15.2 zu behindern, so dass eine von der Antriebsvorrichtung 20 eingeleitete Antriebskraft zumindest überwiegend oder vollständig auf das unbehinderte Drehgelenk 15.1, 15.2 übertragen wird.

Wie in Fig. 11 schematisch gezeigt, kann das Zwangsmittel 26 einen mit dem Greifergrundkörper 12 verbundenen Reibkörper 27 und einen mit dem Basisglied 14 verbunden Gegenreibkörper 28 aufweisen, wobei der Reibkörper 27 und der Gegenreibkörper 28 derart ausgebildet und angeordnet sind, dass bei einer Annäherung der ersten Drehachse D1 an die dritte Drehachse D3 der Reibkörper 27 und der Gegenreibkörper 28, wie in Fig. 8 gezeigt, in einen Reibkontakt treten, welcher ein Weiterdrehen des Basisglieds 14 behindert.

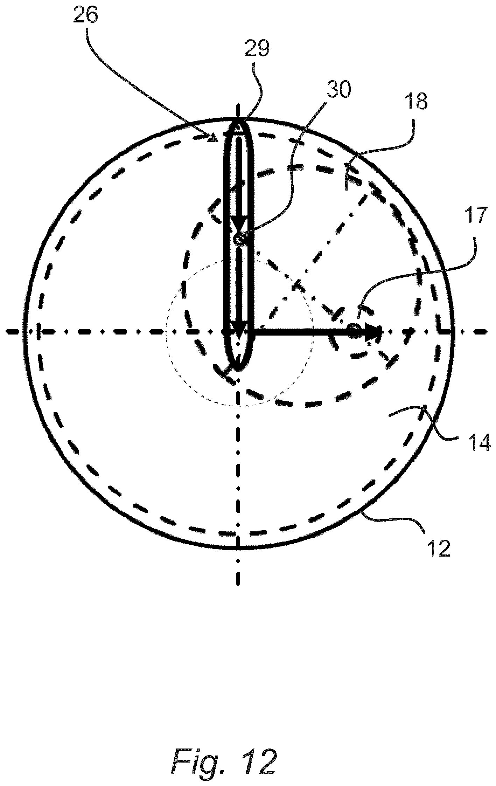

Wie in Fig. 12 schematisch gezeigt, kann das Zwangsmittel 26 einen mit dem Zwischenglied 18 verbundenen Stift 30 und eine mit dem Greifergrundkörper 12 verbundene Nut 29 aufweisen, wobei der Stift 30 in die Nut 27 derart eingreift, dass bei einer Annäherung der ersten Drehachse D1 an die dritte Drehachse D3 der Stift 30 an das obere Ende der Nut 29 gerät und dort anschlägt, so dass dadurch ein Weiterdrehen des Zwischenglieds 18 erzwungen wird.

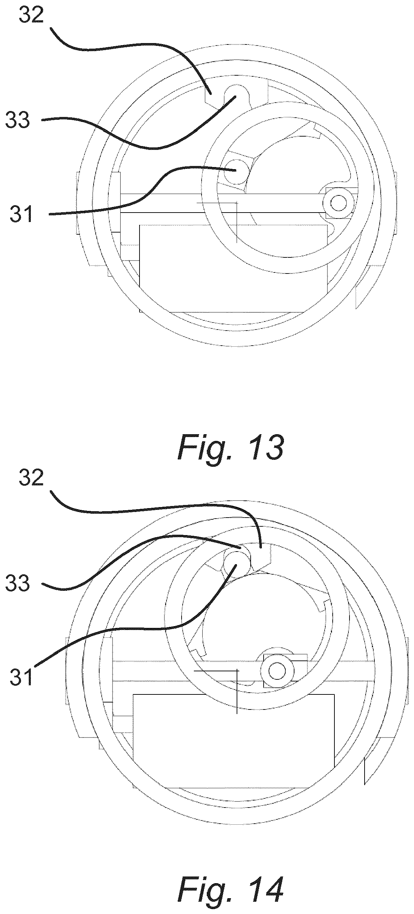

Wie in Fig. 13 bis Fig. 17 schematisch gezeigt, kann das Zwangsmittel 26 einen mit dem Zwischenglied 18 verbundenen Zapfen 31 und einen mit dem Greifergrundkörper 12 verbundenen Gabelkörper 32 aufweist, der eine Ausnehmung 33 umfasst, wobei der Gabelkörper 32 und der Zapfen 31 derart ausgebildet und angeordnet sind, dass bei einer Annäherung der ersten Drehachse D1 an die dritte Drehachse D3 der Zapfen 31 in die Ausnehmung 33 des Gabelkörpers 32 eingreift, um durch eine formschlüssige Kopplung des Greifergrundkörpers 12 mit dem Zwischenglied 18 ein gemeinsames Drehen im Bereich der Singularitätsposition des Zwischenglieds 18 und des Basisgliedes zu verhindern. Der Zapfen 31 wird dabei durch den die erste Kreisringscheibe 24.1 mit der zweiten Kreisringscheibe 24.2 verbindenden Zwischenglied-Verbindungssteg 25 gebildet.

## Patentansprüche

1. Robotergreifer, aufweisend einen ersten Greiferfinger (16.1) und wenigstens einen zweiten Greiferfinger (16.2), einen Greifergrundkörper (12), ein Basisglied (14), welches mittels eines ersten Drehgelenks (15.1) um eine erste Drehachse (D1) drehbar bezüglich des Greifergrundkörpers (12) gelagert ist, und ein Zwischenglied (18), welches mittels eines zweiten Drehgelenks (15.2) bezüglich des Basisglieds (14) drehbar gelagert ist und zwar um eine zweite Drehachse (D2), die parallel zur ersten Drehachse (D1) ausgerichtet und in einem konstanten ersten Abstand (A1) von der ersten Drehachse (D1) angeordnet ist, des Weiteren aufweisend einen Fingerträger (17), der den ersten Greiferfinger (16.1) trägt und der mittels eines dritten Drehgelenks (15.3) bezüglich des Zwischenglieds (18) drehbar gelagert ist und zwar um eine dritte Drehachse (D3), die parallel sowohl zur ersten Drehachse (D1) als auch zur zweiten Drehachse (D2) ausgerichtet und in einem konstanten zweiten Abstand (A2) von der zweiten Drehachse (D2) angeordnet ist, sowie aufweisend
eine von dem ersten Drehgelenk (15.1), dem zweiten Drehgelenk (15.2) und dem dritten Drehgelenk (15.3) separate Antriebsvorrichtung (20), die sich gegen den Greifergrundkörper (12) abstützt und die ausgebildet ist, den Fingerträger (17) relativ zum zweiten Greiferfinger (16.2) mit einer Antriebskraft zu verstellen, die ausschließlich über die Antriebsvorrichtung (20) in den Fingerträger (17) eingeleitet wird.

2. Robotergreifer nach Anspruch 1, **dadurch gekennzeichnet, dass** der wenigstens eine zweite Greiferfinger (16.2) bezüglich des Greifergrundkörpers (12) feststehend angeordnet ist.

3. Robotergreifer nach Anspruch 1 oder 2, **dadurch gekennzeichnet, dass** die Antriebsvorrichtung (20) einen Motor (M) und eine am Greifergrundkörper (12) um eine Spindelachse (S) drehbar gelagerte und von dem Motor (M) drehangetriebene Antriebsspindel (21) aufweist, auf der eine Abtriebs-Spindelmütter (22) entlang der Spindelachse (S) linear verstellbar gelagert ist, wobei die Abtriebs-Spindelmutter (22) zum Bewegen des Fingerträgers (17) durch ein Antreiben des Motors (M) an den Fingerträger (17) angekoppelt ist.

4. Robotergreifer nach Anspruch 3, **dadurch gekennzeichnet, dass** der Fingerträger (17) starr mit der Abtriebs-Spindelmutter (22) verbunden ist.

5. Robotergreifer nach Anspruch 3, aufweisend eine Linearführung, die ausgebildet ist, den Fingerträger (17) bezüglich des Greifergrundkörpers (12) mittels einer zweiwertigen ersten Lagerung zur Aufnahme von Kräften derart geführt zu lagern, dass der Fingerträger (17) nur in Richtung der Spindelachse (S) verstellbar ist, wobei der Fingerträger (17) mittels einer einwertigen zweiten Lagerung an die Abtriebs-Spindelmutter (22) zur Kraftübertragung angekoppelt ist

6. Robotergreifer nach einem der Ansprüche 1 bis 5, aufweisend eine einwertige Drehmomentabstützung, die ausgebildet ist, den Fingerträger (17) bezüglich des Greifergrundkörpers (12) lediglich um einen einzigen Drehfreiheitsgrad zur Aufnahme von Drehmomenten um eine Längserstreckung des ersten Greiferfingers (16.1) zu lagern, wobei der Fingerträger (17) mittels des ersten Drehgelenks (15.1), des zweiten Drehgelenks (15.2) und des dritten Drehgelenks (15.3) in den beiden anderen Drehfreiheitsgraden des Fingerträgers (17) abgestützt ist.

7. Robotergreifer nach einem der Ansprüche 1 bis 6, **dadurch gekennzeichnet, dass** das Basisglied (14) eine rotationssymmetrische Außenmantelwand aufweist, an der das Basisglied (14) vollständig innerhalb der Außenkontur des Greifergrundkörpers (12) drehbar gelagert ist, das Zwischenglied (18) des Robotergreifers (11) eine rotationssymmetrische Außenmantelwand aufweist, an der das Zwischenglied (18) vollständig innerhalb der Außenkontur des Basisglieds (14) drehbar gelagert ist, und der Fingerträger (17) des Robotergreifers (11) eine rotationssymmetrische Außenmantelwand aufweist, an der der Fingerträger (17) vollständig innerhalb der Außenkontur des Zwischenglieds (18) drehbar gelagert ist, wobei
- das erste Drehgelenk (15.1) ein das Basisglied (14) umgebendes erstes Unterlager (19.1a) aufweist, das auf einer dem Fingerträger (17) nahen Bauhöhe angeordnet ist und ein zum ersten Unterlager (19.1a) beabstandetes, erstes Oberlager (19.1b) aufweist, das auf einer dem Fingerträger (17) fernen Bauhöhe angeordnet ist,
- das zweite Drehgelenk (15.2) ein das Zwischenglied (18) umgebendes zweites Unterlager (19.2a) aufweist, das auf einer dem Fingerträger (17) nahen Bauhöhe angeordnet ist und ein zum zweiten Unterlager (19.2a) beabstandetes, zweites Oberlager (19.2b) aufweist, das auf einer dem Fingerträger (17) fernen Bauhöhe angeordnet ist, und
- das dritte Drehgelenk (15.3) ein den Fingerträger (17) umgebendes drittes Unterlager (19.3a) aufweist, das auf einer dem Fingerträger (17) nahen Bauhöhe angeordnet ist und ein zum dritten Unterlager (19.3a) beabstandetes, drittes Oberlager (19.3b) aufweist, das auf einer dem Fingerträger (17) fernen Bauhöhe angeordnet ist.

8. Robotergreifer nach Anspruch 7, **dadurch gekennzeichnet, dass** das Zwischenglied (18) eine erste Kreisringscheibe (24.1) aufweist, die mittels des zweiten Unterlagers (19.2a) an dem Basisglied (14) drehbar gelagert ist und eine zweite Kreisringscheibe (24.2) aufweist, die mittels des zweiten Oberlagers (19.2b) an dem Basisglied (14) drehbar gelagert ist und die erste Kreisringscheibe (24.1) durch einen Zwischenglied-Verbindungssteg (25) mit der zweiten Kreisringscheibe (24.2) starr verbunden ist.

9. Robotergreifer nach Anspruch 7 oder 8, **dadurch gekennzeichnet, dass** das Basisglied (14) eine dritte Kreisringscheibe (24.3) aufweist, die mittels des ersten Unterlagers (19.1a) an dem Greifergrundkörper (12) drehbar gelagert ist und eine vierte Kreisringscheibe (24.4) aufweist, die mittels des ersten Oberlagers (19.1b) an dem Greifergrundkörper (12) drehbar gelagert ist und die dritte Kreisringscheibe (24.3) durch einen Basisglied-Verbindungssteg mit der vierten Kreisringscheibe (24.4) starr verbunden ist.

10. Robotergreifer nach einem der Ansprüche 1 bis 9, aufweisend eine Einrichtung zur Umgehung von Singularitäten, bei denen die erste Drehachse (D1) mit der dritten Drehachse (D3) fluchtet, aufweisend ein Zwangsmittel (26), das ausgebildet ist, eine Bewegung des Basisgliedes (14) um die erste Drehachse (D1) zu behindern, so dass eine von der Antriebsvorrichtung (20) eingeleitete Antriebskraft im Bereich der Singularität zumindest überwiegend oder vollständig auf die Rotation des Zwischengliedes (18) um die zweite Drehachse (D2) übertragen wird.

11. Robotergreifer nach Anspruch 10, **dadurch gekennzeichnet, dass** das Zwangsmittel (26) einen mit dem Greifergrundkörper (12) verbundenen Reibkörper (27) und einen mit dem Basisglied (14) verbunden Gegenreibkörper (28) aufweist, wobei der Reibkörper (27) und der Gegenreibkörper (28) derart ausgebildet und angeordnet sind, dass bei einer Annäherung der ersten Drehachse (D1) an die dritte Drehachse (D3) der Reibkörper (27) und der Gegenreibkörper (28) in einen Reibkontakt treten, welcher ein Weiterdrehen des Basisglieds (14) behindert.

12. Robotergreifer nach Anspruch 10, **dadurch gekennzeichnet, dass** das Zwangsmittel (26) einen mit dem Zwischenglied (18) verbundenen Zapfen (31) und einen mit dem Greifergrundkörper (12) verbundenen Gabelkörper (32) aufweist, der eine Ausnehmung (33) umfasst, wobei der Gabelkörper (32) und der Zapfen (31) derart ausgebildet und angeordnet sind, dass bei einer Annäherung der ersten Drehachse (D1) an die dritte Drehachse (D3) der Zapfen (31) in die Ausnehmung (33) des Gabelkörpers (32) eingreift, um durch eine formschlüssige Kopplung des Greifergrundkörpers (12) mit dem Zwischenglied (18) ein Weiterdrehen des Zwischenglieds (18) zu erzwingen.

13. Robotergreifer nach Anspruch 10, **dadurch gekennzeichnet, dass** das Zwangsmittel (26) einen mit dem Zwischenglied (18) verbundenen Zapfen (31) und zwei Seile (43.1, 43.2) aufweist, die jeweils ein erstes Seilende aufweisen, die jeweils an dem Zapfen 31 befestigt sind und wobei die jeweils anderen Seilenden an dem Basisglied (14) befestigt sind.

14. Robotergreifer nach Anspruch 7 bis 13, **dadurch gekennzeichnet, dass** der Zapfen (31) durch den die erste Kreisringscheibe (24.1) mit der zweiten Kreisringscheibe (24.2) verbindenden Zwischenglied-Verbindungssteg (25) gebildet wird.

15. Robotergreifer nach einem der Ansprüche 1 bis 14, **dadurch gekennzeichnet, dass** die Antriebsvorrichtung (20) selbsthemmend ausgebildet ist.

## Claims

1. Robot gripper, comprising a first gripper finger (16.1) and at least one second gripper finger (16.2), a gripper base body (12), a base member (14), which is mounted by means of a first pivot joint (15.1) so as to be rotatable about a first axis of rotation (D1) relative to the gripper base body (12), and an intermediate member (18) which is rotatably mounted relative to the base member (14) by means of a second pivot (15.2) about a second axis of rotation (D2) which is aligned parallel to the first axis of rotation (D1) and arranged at a constant first distance (A1) from the first axis of rotation (D1),
further comprising a finger carrier (17) which supports the first gripper finger (16.1) and which is pivoted with respect to the intermediate member (18) by means of a third pivot (15.3) about a third axis of rotation (D3) which is parallel to both the first axis of rotation (D1) and the second axis of rotation (D2) and is located at a constant second distance (A2) from the second axis of rotation (D2), and comprising
a drive device (20) separate from the first pivot joint (15.1), the second pivot joint (15.2) and the third pivot joint (15.3), which is supported against the gripper base body (12) and which is designed to adjust the finger carrier (17) relative to the second gripper finger (16.2) with a driving force which is introduced into the finger carrier (17) exclusively via the drive device (20) .

2. Robot gripper according to claim 1, **characterized in that** the at least one second gripper finger (16.2) is arranged in a fixed position relative to the gripper base body (12).

3. Robot gripper according to claim 1 or 2, **characterized in that** the drive device (20) comprises a motor (M) and a drive spindle (21) rotatably mounted on the gripper base body (12) about a spindle axis (S) and rotatably driven by the motor (M), on which an output spindle nut (22) is mounted so as to be linearly adjustable along the spindle axis (S), wherein the output spindle nut (22) is coupled to the finger carrier (17) for moving the finger carrier (17) by driving the motor (M).

4. Robot gripper according to claim 3, **characterized in that** the finger carrier (17) is rigidly connected to the output spindle nut (22).

5. Robot gripper according to claim 3, having a linear guide which is designed to support the finger carrier (17) with respect to the gripper base body (12) in a guided manner by means of a divalent first bearing for absorbing forces in such a way that the finger carrier (17) can be adjusted only in the direction of the spindle axis (S), wherein the finger carrier (17) being coupled to the output spindle nut (22) for force transmission by means of a monovalent second bearing.

6. Robot gripper according to any one of claims 1 to 5, comprising a monovalent torque support which is designed to support the finger carrier (17) relative to the gripper base body (12) only by a single degree of rotational freedom to absorb torques about a longitudinal extension of the first gripper finger (16.1), wherein the finger carrier (17) being supported by means of the first pivot joint (15.1), the second pivot joint (15.2) and the third pivot joint (15.3) in the other two degrees of rotational freedom of the finger carrier (17).

7. Robot gripper according to one of claims 1 to 6, **characterized in that** the base member (14) has a rotationally symmetrical outer jacket wall on which the base member (14) is rotatably mounted completely within the outer contour of the gripper base body (12), the intermediate member (18) of the robot gripper (11) has a rotationally symmetrical outer jacket wall, on which the intermediate member (18) is rotatably mounted completely within the outer contour of the base member (14), and the finger carrier (17) of the robot gripper (11) has a rotationally symmetrical outer casing wall on which the finger carrier (17) is rotatably mounted completely within the outer contour of the intermediate member (18), wherein
- the first pivot joint (15.1) has a first lower bearing (19.1a) surrounding the base member (14), which is arranged at a structural height close to the finger carrier (17) and has a first upper bearing (19.1b) spaced from the first lower bearing (19.1a), which is arranged at a structural height remote from the finger carrier (17),
- the second pivot joint (15.2) has a second lower bearing (19.2a) surrounding the intermediate member (18), which is arranged at a structural height close to the finger carrier (17) and has a second upper bearing (19.2b) spaced apart from the second lower bearing (19.2a), which is arranged at a structural height remote from the finger carrier (17), and
- the third pivot joint (15.3) has a third lower bearing (19.3a) which surrounds the finger carrier (17), is arranged at a structural height close to the finger carrier (17) and has a third upper bearing (19.3b) which is spaced apart from the third lower bearing (19.3a) and is arranged at a structural height remote from the finger carrier (17).

8. Robot gripper according to claim 7, **characterized in that** the intermediate member (18) comprises a first annular disc (24.1) which is rotatably mounted on the base member (14) by means of the second lower bearing (19.2a) and a second annular disc (24.2), which is rotatably mounted on the base member (14) by means of the second upper bearing (19.2b), and the first annular disc (24.1) is rigidly connected to the second annular disc (24.2) by an intermediate member connecting web (25).

9. Robot gripper according to claim 7 or 8, **characterized in that** the base member (14) comprises a third annular disc (24.3) rotatably supported by means of the first lower bearing (19.1a) on the gripper base body (12) and a fourth annular disc (24.4) rigidly connected to the third annular disc (24.3) by means of an intermediate member connecting web (25), which is rotatably mounted on the gripper base body (12) by means of the first upper bearing (19.1b), and the third annular disc (24.3) is rigidly connected to the fourth annular disc (24.4) by a base member connecting web.

10. Robot gripper according to any one of claims 1 to 9, comprising a device for bypassing singularities in which the first axis of rotation (D1) is aligned with the third axis of rotation (D3), comprising a constraining means (26) formed, hindering a movement of the base member (14) about the first axis of rotation (D1), so that a driving force introduced by the drive device (20) in the region of the singularity is at least predominantly or completely transmitted to the rotation of the intermediate member (18) about the second axis of rotation (D2).

11. Robot gripper according to claim 10, **characterized in that** the constraining means (26) comprises a friction body (27) connected to the gripper base body (12) and a counter friction body (28) connected to the base member (14), wherein the friction body (27) and the counter-friction body (28) are constructed and arranged in such a way that when the first axis of rotation (D1) approaches the third axis of rotation (D3), the friction body (27) and the counter-friction body (28) come into frictional contact which prevents further rotation of the base member (14).

12. Robot gripper according to claim 10, **characterized in that** the constraining means (26) comprises a pin (31) connected to the intermediate member (18) and a forked body (32) connected to the gripper base body (12) and comprising a recess (33), the forked body (32) and the pin (31) being so formed and arranged, **in that**, when the first axis of rotation (D1) approaches the third axis of rotation (D3), the pin (31) engages in the recess (33) of the fork body (32) in order to force the intermediate member (18) to rotate further by means of a form-fitting coupling of the gripper basic body (12) to the intermediate member (18).

13. Robot gripper according to claim 10, **characterized in that** the constraining means (26) comprises a pin (31) connected to the intermediate member (18) and two ropes (43.1, 43.2), each having a first rope end, each of which is attached to the pin (31), and the other rope ends being attached to the base member (14).

14. Robot gripper according to Claims 7 to 13, **characterized in that** the pin (31) is formed by the intermediate member connecting web (25) connecting the first annular disc (24.1) with the second annular disc (24.2).

15. Robot gripper according to any one of claims 1 to 14, **characterized in that** the drive device (20) is designed to be self-locking.

## Revendications

1. Pince de robot, comprenant un premier doigt de pince (16.1) et au moins un deuxième doigt de pince (16.2), un corps de base de pince (12), un élément de base (14), qui est monté au moyen d'une première articulation à pivot (15.1) de manière à pouvoir tourner autour d'un premier axe de rotation (D1) par rapport au corps de base de pince (12), et un élément intermédiaire (18) qui est monté à rotation par rapport à l'élément de base (14) au moyen d'une deuxième articulation à pivot (15.2) autour d'un deuxième axe de rotation (D2) qui est orienté parallèlement au premier axe de rotation (D1) et disposé à une première distance constante (A1) du premier axe de rotation (D1),
comprenant en outre un support de doigt (17) qui supporte le premier doigt de pince (16.1) et qui est pivoté par rapport à l'élément intermédiaire (18) au moyen d'un troisième articulation à pivot (15.3) autour d'un troisième axe de rotation (D3) qui est parallèle à la fois au premier axe de rotation (D1) et au deuxième axe de rotation (D2) et qui est situé à une deuxième distance constante (A2) du deuxième axe de rotation (D2), et comprenant
un dispositif d'entraînement (20) séparé de la première articulation pivot (15.1), de la deuxième articulation à pivot (15.2) et de la troisième articulation à pivot (15.3), qui s'appuie sur le corps de base de la pince (12) et qui est conçu pour régler le support de doigt (17) par rapport au deuxième doigt de pince (16.2) avec une force d'entraînement qui est introduite dans le support de doigt (17) exclusivement par le dispositif d'entraînement (20).

2. Pince de robot selon la revendication 1, **caractérisée en ce que** le au moins un deuxième doigt de pince (16.2) est disposé dans une position fixe par rapport au corps de base de la pince (12).

3. Pince de robot selon la revendication 1 ou 2, **caractérisée en ce que** le dispositif d'entraînement (20) comprend un moteur (M) et une broche d'entraînement (21) montée de manière à pouvoir tourner sur le corps de base de la pince (12) autour d'un axe de broche (S) et entraînée en rotation par le moteur (M), sur laquelle un écrou de broche de sortie (22) est monté de manière à pouvoir être réglé linéairement le long de l'axe de broche (S), dans laquelle l'écrou de broche de sortie (22) est couplé au support de doigt (17) pour déplacer le support de doigt (17) en entraînant le moteur (M).

4. Pince de robot selon la revendication 3, **caractérisée en ce que** le support de doigt (17) est relié de manière rigide à l'écrou de la broche de sortie (22).

5. Pince de robot selon la revendication 3, avec un guidage linéaire qui est conçu pour soutenir le support de doigt (17) par rapport au corps de base de la pince (12) de manière guidée au moyen d'un premier palier divalent pour absorber les forces de telle sorte que le support de doigt (17) ne puisse être réglé que dans la direction de l'axe de la broche (S), le support de doigt (17) étant couplé à l'écrou de la broche de sortie (22) pour la transmission des forces au moyen d'un deuxième palier monovalent.

6. Pince de robot selon l'une quelconque des revendications 1 à 5, comprenant un support de couple monovalent qui est conçu pour supporter le support de doigt (17) par rapport au corps de base de la pince (12) seulement par un seul degré de liberté de rotation pour absorber les couples autour d'une extension longitudinale du premier doigt de la pince (16.1), dans laquelle le support de doigt (17) est supporté au moyen de la première articulation à pivot (15.1), de la deuxième articulation à pivot (15.2) et de la troisième articulation à pivot (15.3) dans les deux autres degrés de liberté de rotation du support de doigt (17).

7. Pince de robot selon l'une des revendications 1 à 6, **caractérisé en ce que** de l'élément de base (14) présente une paroi d'enveloppe extérieure à symétrie de révolution sur laquelle le corps de base (14) est monté à rotation complètement à l'intérieur du contour extérieur du corps de base de la pince (12), l'élément intermédiaire (18) du pince de robot (11) présente une paroi d'enveloppe extérieure à symétrie de révolution, sur lequel l'élément intermédiaire (18) est monté de manière à pouvoir tourner complètement à l'intérieur du contour extérieur de l'élément de base (14), et le support de doigt (17) de la pince de robot (11) présente une paroi d'enveloppe extérieure à symétrie de révolution sur laquelle le support de doigt (17) est monté de manière à pouvoir tourner complètement à l'intérieur du contour extérieur de l'élément intermédiaire (18), dans lequel
- la première articulation pivot (15.1) présente un premier palier inférieur (19.1a) entourant de l'élément de base (14), qui est disposé à une hauteur structurelle proche du support de doigt (17) et présente un premier palier supérieur (19.1b) espacé du premier palier inférieur (19.1a), qui est disposé à une hauteur structurelle éloignée du support de doigt (17),
- la deuxième articulation à pivot (15.2) présente un deuxième palier inférieur (19.2a) entourant l'élément intermédiaire (18), qui est disposé à une hauteur de construction proche du support de doigt (17) et présente un deuxième palier supérieur (19.2b) espacé du deuxième palier inférieur (19.2a), qui est disposé à une hauteur de construction éloignée du support de doigt (17), et
- la troisième articulation à pivot (15.3) présente un troisième palier inférieur (19.3a) qui entoure le support de doigt (17), est disposé à une hauteur structurelle proche du support de doigt (17) et comporte un troisième palier supérieur (19.3b) qui est espacé du troisième palier inférieur (19.3a) et est disposé à une hauteur structurelle éloignée du support de doigt (17).

8. Pince de robot selon la revendication 7, **caractérisée en ce que** l'élément intermédiaire (18) comprend un premier disque annulaire (24.1) qui est monté à rotation sur l'élément de base (14) au moyen du deuxième palier inférieur (19.2a) et un deuxième disque annulaire (24.2), qui est monté à rotation sur l'élément de base (14) au moyen du deuxième palier supérieur (19.2b), et le premier disque annulaire (24.1) est relié de manière rigide au deuxième disque annulaire (24.2) par une nervure de liaison (25) de l'élément intermédiaire.

9. Pince de robot selon la revendication 7 ou 8, **caractérisée en ce que** l'élément de base (14) comprend un troisième disque annulaire (24.3) supporté de manière rotative au moyen du premier palier inférieur (19.1a) sur le corps de base de la pince (12) et un quatrième disque annulaire (24.4) relié de manière rigide au troisième disque annulaire (24.3) au moyen d'un élément intermédiaire de liaison (25), qui est monté à rotation sur le corps de base de la pince (12) de la pince au moyen du premier palier supérieur (19.1b), et le troisième disque annulaire (24.3) est relié rigidement au quatrième disque annulaire (24.4) par un élément de liaison de base.

10. Pince de robot selon l'une quelconque des revendications 1 à 9, comprenant un dispositif pour contourner des singularités dans lequel le premier axe de rotation (D1) est aligné avec le troisième axe de rotation (D3), comprenant un moyen de contrainte (26) formé, empêchant un mouvement de l'élément de base (14) autour du premier axe de rotation (D1), de sorte qu'une force d'entraînement introduite par le dispositif d'entraînement (20) dans la région de la singularité est au moins principalement ou complètement transmise à la rotation de l'élément intermédiaire (18) autour du deuxième axe de rotation (D2).

11. Pince de robot selon la revendication 10, **caractérisée en ce que** le moyen de contrainte (26) comprend un corps de friction (27) relié au corps de base de la pince (12) et un corps de contre-friction (28) relié à l'élément de base (14), dans lequel le corps de friction (27) et le corps de contre-friction (28) sont construits et disposés de telle sorte que lorsque le premier axe de rotation (D1) se rapproche du troisième axe de rotation (D3), le corps de friction (27) et le corps de contre-friction (28) entrent en contact par friction, ce qui empêche toute rotation supplémentaire de l'élément de base (14).

12. Pince de robot selon la revendication 10, **caractérisée en ce que** le moyen de contrainte (26) comprend une broche (31) reliée à l'élément intermédiaire (18) et un corps fourchu (32) relié au corps de base de la pince (12) et comprenant un évidement (33), le corps fourchu (32) et la broche (31) étant ainsi formés et disposés, **en ce que**, lorsque le premier axe de rotation (D1) s'approche du troisième axe de rotation (D3), la broche (31) s'engage dans l'évidement (33) le corps fourche (32) afin de forcer l'élément intermédiaire (18) à continuer à tourner au moyen d'un accouplement à engagement positif du corps de base de la pince (12) à l'élément intermédiaire (18).

13. Pince pour robot selon la revendication 10, **caractérisée en ce que** le moyen de contrainte (26) comprend une broche (31) reliée à l'élément intermédiaire (18) et deux cordes (43.1, 43.2), chacune ayant une première extrémité de corde, chacune d'entre elles étant fixée à la broche (31), et les autres extrémités de corde étant fixées à l'élément de base (14) .

14. Pince de robot selon les revendications 7 à 13, **caractérisée en ce que** la broche (31) est formée par l'âme de liaison (25) de l'élément intermédiaire reliant le premier disque annulaire (24.1) au deuxième disque annulaire (24.2).

15. Pince de robot selon l'une quelconque des revendications 1 à 14, **caractérisée en ce que** le dispositif d'entraînement (20) est conçu pour être autobloquant.
